# EUROPÄISCHE PATENTSCHRIFT

(11) **EP 4 017 822 B1**
(45) Veröffentlichungstag und Bekanntmachung des Hinweises auf die Patenterteilung: **20.12.2023**
(21) Anmeldenummer: 20812275.4
(22) Anmeldetag: 24.11.2020
(51) Int. Cl.: B65H 1/28, B65H 1/30, B65H 1/26, B65H 5/00, B65H 7/02, B65H 3/32

(54) **SUBSTRATHANDHABUNGSSYSTEME MIT EINER BOGENBEARBEITUNGSMASCHINE UND ZUMINDEST EINER AUSRICHTEINRICHTUNG UND VERFAHREN ZUR AUSRICHTUNG UND/ODER LOCKERUNG ZUMINDEST EINES TEILSTAPELS VON BOGEN**
SUBSTRATE HANDLING SYSTEMS COMPRISING A SHEET PROCESSING MACHINE AND AT LEAST ONE ALIGNING DEVICE, AND METHOD FOR ALIGNING AND/OR LOOSENING AT LEAST ONE SUB-STACK OF SHEETS
SYSTÈMES DE MANIPULATION DE SUBSTRATS COMPRENANT UNE MACHINE DE TRAITEMENT DE FEUILLES ET AU MOINS UN DISPOSITIF D'ALIGNEMENT, ET PROCÉDÉ POUR ALIGNER ET/OU DESSERRER AU MOINS UN SOUS-EMPILEMENT DE FEUILLES

(30) Priorität: 27.02.2020 DE 102020105184
(43) Veröffentlichungstag der Anmeldung: 29.06.2022
(73) Patentinhaber: Koenig & Bauer AG, 97080 Würzburg (DE)
(72) Erfinder: CHRISTIANSEN, Hans, 216 43 Limhamn (SE); DRAGOZ, Dragan, 1072 Forel (Lavaux) (CH); GENEFKE, Kurt, 7120 Vejle (DK); MADSEN, Kaj Verner, 6200 Åbenrå (DK); NIELSEN, Kim, 5220 Odense (DK); SCHUBERT, Julian, 97842 Karbach (DE)
(74) Vertreter: Koenig & Bauer AG
(86) Internationale Anmeldenummer: PCT/EP2020/083181
(87) Internationale Veröffentlichungsnummer: WO 2021/170269

(56) Entgegenhaltungen:
- EP-A1- 2 457 858
- DE-A1- 2 723 162
- JP-A- 2009 091 119
- US-A- 316 329
- US-A1- 2016 145 072

## Beschreibung

Die Erfindung betrifft ein Substrathandhabungssystem mit einer Bogenbearbeitungsmaschine und zumindest einer Ausrichteinrichtung gemäß den Merkmalen des Anspruches 1 und ein Verfahren zur Ausrichtung und/oder Lockerung zumindest eines Teilstapels von Bogen gemäß den Merkmalen des Anspruches 10.

Substrate werden beispielsweise in einem Substrathandhabungssystem gehandhabt und/oder verarbeitet. Häufig erfolgt die Zufuhr von insbesondere bogenförmigem Substrat in Form zumindest eines Substratstapels. Um eine der jeweiligen Anwendung entsprechende Handhabung und/oder Verarbeitung der Substrate zu ermöglichen, ist ein Ausrichten und/oder Lockern der Substrate innerhalb des Substratstapels und/oder zumindest innerhalb eines Teilstapels erforderlich.

Die WO 2016/174 221 A1 zeigt eine Druckmaschinenanordnung mit mehreren Bearbeitungsstationen für Bogen. Einer Non-Impact-Druckeinrichtung ist eine Übergabeeinrichtung vorgeordnet, welche die Bogen jeweils in ihrem Axialregister und/oder Umfangsregister und/oder Diagonalregister registerhaltig relativ zur Druckposition der Non-Impact-Druckeinrichtung ausrichtet.

Die DE 10 2010 027 119 A1 zeigt ein Verfahren und eine Vorrichtung zum Positionieren von Bogen für die nachfolgende Bearbeitung in einer Bogenbearbeitenden Maschine. Die Positionierung erfolgt dabei ohne die Verwendung von Front- oder Seitenanschlägen. Eine Grobpositionierung des Bogens in Umfangs- und Schrägrichtung erfolgt durch ein gesteuertes Anhalten des Bogens, eine Seitenausrichtung erfolgt im Bereich eines Zuführtisches, eine Feinpositionierung in Umfangs- und Schrägrichtung erfolgt durch eine Positionierung von Passeranschlägen eines Bogentransportsystems. Einem jeweiligen Passeranschlag ist dabei ein unabhängiger Servomotor zugeordnet.

Die US 1 743 921 A zeigt eine Druckmaschine. Die Auslage weist eine Kombination von Rüttelplatten mit Blasdüsen auf, wobei das bedruckte Substrat während des Ablegens auf einem Auslagestapel getrocknet wird.

Durch die DE 100 03 024 A1 ist ein Rütteltisch bekannt, welcher eine Grundplatte mit Anschlägen aufweist, durch welchen ein Stapel von bogenförmigem Material ausgerichtet wird. Dabei ist mindestens einem Anschlag mindestens eine Blasdüse zugeordnet.

Die DE 10 2012 009 466 A1 zeigt eine Fördervorrichtung zum Fördern von vereinzelten Blättern, insbesondere Brennstoffzellenkomponenten, über einen Förderabschnitt zu einer Übergabeposition. Die Übergabeposition weist einen Anschlag auf. Der Förderabschnitt ist mindestens teilweise als Lufttisch ausgestaltet, der mindestens eine Austrittsöffnung zur Beaufschlagung der Unterseite des zu fördernden Blattes mittels eines Gasstroms aufweist. An der Übergabeposition ist zudem mindestens eine Gasabführung angeordnet.

Die DE 196 07 826 A1 offenbart eine Blattzufuhreinrichtung für Reproduktionsvorrichtungen. Die Einzelblätter werden der Reihe nach an einem ersten Anschlag zur Anlage gebracht, um einen Einzelblattstapel auszubilden. Zweite und dritte Anschläge dienen der Ausrichtung des Einzelblattstapels, wobei die zweiten und dritten Anschläge in Schwingung versetzt werden. Während der Rüttelbewegung werden die zweiten und dritten Anschläge so weit zu auf eine Mittellinie zubewegt, dass sich der Blattstapel aufwölbt.

Die EP 0 614 840 A1 offenbart einen Rütteltisch zum Rütteln von in Blattlagen vorliegendem Gut, welcher aus einer horizontalen Stellung neigbar ist. Mindestens zwei benachbarte Seiten des in Vibration versetzbaren Auflagetisches weisen seitliche Anschläge auf. Blaseinrichtungen zum Einblasen von Luft sind in zumindest einen ersten der Anschläge integriert. Ein zweiter und ein dritter Anschlag sind senkrecht zur Tischebene des Auflagetisches verfahrbar.

Die DE 10 2015 210 556 A1 lehrt eine Auslage einer bogenverarbeitenden Maschine. Dabei sind Vorderkantenanschläge, eine periodische Rüttelbewegung vollführende Seitenkantenanschläge sowie beweglich gelagerte Hinterkantenanschläge zum Ausrichten der fallenden und den Auslagestapel bildenden Bogen vorgesehen.

Die DE 42 16 123 A1 lehrt eine formatveränderbare Stapelstation für aufeinanderfolgend angelieferte Blatterzeugnisse, welche einen Stapelkorb mit einem Auffangboden und seitlichen, vorderen und hinteren Anschlägen umfasst. Die Anschläge sind zur Anpassung an das Bogenformat durch Format-Verstellmittel verstellbar. Der Auffangboden besteht aus mehreren zueinander parallelen Bodenstäben, die quer zu ihrer Längsausrichtung mittels Format-Verstellmittel verstellbar sind. Auch sind die Bodenstäbe in Richtung ihrer Längsachse verschiebbar. Die Format-Verstellmittel für die in x-Richtung verstellbaren Elemente sind miteinander gekoppelt und mit einer ersten Antriebseinrichtung verbunden. Die Format-Verstellmittel für die in y-Richtung verstellbaren Elemente sind miteinander gekoppelt und mit einer zweiten Antriebseinrichtung verbunden.

Die Lehre der DE 27 23 162 A1 offenbart eine Vorrichtung zur Übergabe eines Teilstapels zu schneidenden Gutes von einem Gesamtstapel an einen Rütteltisch. Die Vorrichtung zur Übergabe des Teilstapels weist Greifer auf, welche den Teilstapel lockern. Der Rütteltisch weist zwei Kanten mit Seitenwänden auf, welche sich an einer tiefsten Spitze des Rütteltisches treffen, insbesondere wenn dieser über die Diagonale geneigt ist. An einer der tiefsten Kanten ist eine Klemmvorrichtung vorgesehen, die auf den Teilstapel gelegt wird und diesen einklemmt.

Die Lehre der EP 2 457 858 A1 offenbart eine Vorrichtung zum Bilden von Paketen aus Druckprodukten. Ein Aufnahmeraum weist zwei Seitenwände auf. Innerhalb des Aufnahmeraums ist ein Lift mit wenigstens einem Liftelement angeordnet, auf das Druckprodukte ablegbar sind. Die Druckprodukte sind mittels einer nach oben gerichteten Bewegung des Liftelements gegen zumindest ein Presselement zu einem Paket abpressbar. Das wenigstens eine Liftelement ist aus dem Aufnahmeraum heraus in eine das Paket freigebende Position bewegbar.

Die US 2016/0145072 A1 lehrt eine Vorrichtung zum Zwischenspeichern eines Stapels von Bogen. Die Vorrichtung weist eine erste und zweite Seitenführung mit jeweils einer Fläche quer zur Bewegungsrichtung und einen Hinteranschlag, welcher einem Eingabeabschnitt von Bogen zugewandt ist und in Bewegungsrichtung beabstandet ist, auf, welche ein Magazin zum Halten der Bogen bilden. Bogen werden auf mindestens einer ersten einziehbaren Stütze und auf mindestens einer zweiten einziehbaren Stütze abgelegt und anschließend auf als Sammler ausgebildeten Stützen abgelegt und gesammelt. Die einziehbaren Stützen sowie die Sammler sind jeweils der ersten und zweiten Seitenplatte zugeordnet.

Die JP 2009-091119 A offenbart eine Einrichtung zum Ausrichten zumindest eines obersten Bogens eines Stapels, nachdem ein darauf angeordneter Bogen von dem Stapel abgehoben wurde. Die Einrichtung weist eine erste Ausrichtung von Bogen in seitlicher Richtung zwischen zwei Seitenanschlägen sowie eine zweite Ausrichtung von Bogen zwischen einem Vorderanschlag und einem Hinteranschlag auf. Mittels eines verstellbaren Rahmens wird die Einrichtung auf die vorliegende Geometrie und Größe der Bogen eingestellt. Den Seitenanschlägen und dem Vorderanschlag und dem Hinteranschlag ist jeweils ein Pneumatikzylinder zugeordnet, welcher den jeweiligen Anschlag vor oder zurück bewegt, um die Seitenkanten des Bogens mit Druck zu beaufschlagen. Die Seitenanschläge können einen weiteren Pneumatikzylinder aufweisen, welcher eine Schwingung erzeugt. Es wird mindestens der oberste Bogen, in der Regel zwei bis drei oberste Bogen, eines Stapels von Bogen mittels der Einrichtung ausgerichtet.

Die US 316,329 A offenbart eine Ausrichtstation mit einer Auflageplatte zum Ausrichten von Bogen nach dem Bedrucken in einer Druckmaschine. Es sind vier Anschläge in den vier Ecken eines Tisches angeordnet, wobei jeder der Anschläge eine Bogen abstützende Fläche aufweist. Die vier Anschläge werden simultan durch einen Mechanismus diagonal aufeinander zu und voneinander weg bewegt.

Der Erfindung liegt die Aufgabe zugrunde, ein Substrathandhabungssystem mit einer Bogenbearbeitungsmaschine und zumindest einer Ausrichteinrichtung und ein Verfahren zur Ausrichtung und/oder Lockerung zumindest eines Teilstapels von Bogen zu schaffen.

Die Aufgabe wird erfindungsgemäß durch die Merkmale des Anspruches 1 und des Anspruches 10 gelöst.

Das Substrathandhabungssystem umfasst eine Bogenbearbeitungsmaschine und zumindest eine Ausrichteinrichtung. Die zumindest eine Ausrichteinrichtung umfasst zumindest vier Anschläge, wobei jeweils zumindest zwei Anschläge zueinander gegenüberliegend angeordnet sind. Zumindest ein Anschlag ist als Vorderanschlag und zumindest ein Anschlag ist als Hinteranschlag und mindestens zwei Anschläge sind jeweils als Seitenanschlag ausgebildet. Die mindestens zwei Seitenanschläge sind zueinander gegenüberliegend angeordnet. Der zumindest eine Vorderanschlag und der zumindest eine Hinteranschlag sind zueinander gegenüberliegend angeordnet. Vorteilhafterweise ist der zumindest eine Vorderanschlag in seiner Position fixiert ausgebildet. Auf vorteilhafte Weise umfasst mindestens einer der zumindest vier Anschläge mindestens eine Blaseinrichtung mit mindestens einer Fluid ausstoßenden Düse. Die Ausrichteinrichtung weist zumindest ein Stützelement auf. An den zumindest zwei Seitenanschlägen und an dem zumindest einen Hinteranschlag ist jeweils zumindest ein Stützelement angeordnet. Zusätzlich oder alternativ weisen vorteilhafterweise die zumindest vier Anschläge jeweils zumindest einen eine Vibration oder oszillierende Bewegung erzeugenden Antrieb auf. Zusätzlich oder alternativ weisen auf vorteilhafte Weise die mindestens zwei Seitenanschläge und/oder der zumindest eine Hinteranschlag jeweils mindestens zwei Antriebe auf.

In einem Verfahren zur Ausrichtung und/oder Lockerung zumindest eines Teilstapels von Bogen in einem Substrathandhabungssystem mit einer Bogenbearbeitungsmaschine wird der zumindest eine Teilstapel in der Ausrichteinrichtung positioniert. Der zumindest eine Teilstapel wird durch die Ausrichteinrichtung ausgerichtet und/oder gelockert. Dabei werden die zumindest zwei als Seitenanschläge ausgebildeten Anschläge und der zumindest eine als Hinteranschlag ausgebildete Anschlag der zumindest vier Anschläge zumindest zeitweise bewegt und/oder sind bewegbar. Auf vorteilhafte Weise umfasst zumindest einer der zumindest vier Anschläge die zumindest eine Blaseinrichtung, wobei zumindest eine Düse der Blaseinrichtung zumindest während des Ausrichtens des Teilstapels Fluid ausstößt. Zusätzlich oder alternativ werden auf vorteilhafte Weise zumindest zeitweise der zumindest eine als Vorderanschlag ausgebildete Anschlag und zumindest einer der mindestens zwei Seitenanschläge in ihrer Position fixiert, wobei zumindest zeitweise der zumindest eine Hinteranschlag und zumindest ein weiterer der mindestens zwei Seitenanschläge zumindest zeitweise ihren jeweiligen Abstand zu dem fixierten Vorderanschlag und/oder zu dem fixierten Seitenanschlag verringern oder vergrößern. Zusätzlich oder alternativ wird auf vorteilhafte Weise mindestens einer der mindestens zwei Seitenanschläge und/oder der zumindest eine Hinteranschlag jeweils durch zumindest zwei Antriebe bewegt. Der zumindest eine Teilstapel wird bei der Positionierung in der Ausrichteinrichtung auf zumindest einem Stützelement abgelegt. Es wird der zumindest eine Teilstapel bei der Positionierung in der Ausrichteinrichtung auf zumindest einem Stützelement jeweils angeordnet an den mindestens zwei Seitenanschlägen abgelegt. Der zumindest eine Teilstapel wird bei der Positionierung in der Ausrichteinrichtung auf zumindest einem Stützelement jeweils angeordnet an den mindestens zwei Seitenanschlägen und zumindest einem Stützelement angeordnet an dem zumindest einen Hinteranschlag abgelegt. Zusätzlich oder alternativ werden vorteilhafterweise die mindestens zwei Seitenanschläge und/oder der zumindest eine Hinteranschlag jeweils durch zumindest einen eine Vibration und/oder oszillierende Bewegung erzeugenden Antrieb in Vibration und/oder in eine oszillierende Bewegung versetzt.

Ein mit der Erfindung erzielbarer Vorteil ist insbesondere die einfache und zuverlässige Verarbeitung und/oder Handhabung von insbesondere bogenförmigem Substrat. Insbesondere bei Stapeln von Substrat, in welchen einzelne Bogen des Substrates dazu neigen, sich gegenseitig zu blockieren und/oder beispielsweise aufgrund von unterschiedlichen Mengen von aufgetragenem Druckfluid oder weiteren Materialien wie beispielsweise Toner oder Pulver auf das Substrat unterschiedliche Topographien über die Oberfläche des Stapels zu erzeugen, und/oder bei auftretenden Eselsohren ist eine einfache und zuverlässige Handhabung und/oder Verarbeitung des Stapels durch die Ausrichteinrichtung gewährleistet. Durch die Verwendung eines Teilstapels in der Ausrichteinrichtung wird vorteilhafterweise der Nachteil von Topographieunterschieden behoben.

Vorteilhafterweise unterstützt die zumindest eine Blaseinrichtung die Ausrichtung und/oder Lockerung des zumindest einen Teilstapels in der Ausrichteinrichtung. Insbesondere durch die Erzeugung eines Luftkissens unter dem untersten Bogen und/oder durch eingeblasenes Fluid zwischen einzelne Bogen des zumindest einen Teilstapels werden auf vorteilhafte Weise die Bogen gelockert und/oder voneinander gelöst.

Vorteilhafterweise ersetzt das zumindest eine Stützelement insbesondere eine Grundplatte oder einen festen Boden der Ausrichteinrichtung. Insbesondere ist dadurch ein modularer Aufbau des Substrathandhabungssystems und/oder ein unterbrechungsfreies Weiterverarbeiten des zumindest einen Teilstapels im Anschluss an die Ausrichteinrichtung möglich. Dabei ist beispielsweise unterhalb der Ausrichteinrichtung ein weiteres Modul zur Verarbeitung des Teilstapels angeordnet. Auf vorteilhafte Weise ist durch das zumindest eine Stützelement auch eine flexible Einstellung der Anschläge auf die Formatgröße der Bogen des Teilstapels gewährleistet.

Auf vorteilhafte Weise gewährleisten die zumindest zwei Antriebe der mindestens zwei Seitenanschläge und/oder des zumindest einen Hinteranschlags, dass eine Bewegung des jeweiligen Anschlags auf einen gegenüberliegenden Anschlag zu oder von diesem weg unabhängig von einer Vibration oder oszillierenden Bewegung des jeweiligen Anschlags erzeugt wird und/oder die zumindest zwei Bewegungen unabhängig voneinander steuerbar sind und/oder gesteuert werden. Auf vorteilhafte Weise unterstützt die Vibration der Anschläge das Ausrichten und/oder Lockern des zumindest einen Teilstapels.

Insbesondere sind auf vorteilhafte Weise insbesondere die Kanten der einzelnen Substrate eines Teilstapels durch die Ausrichteinrichtung ausrichtbar und/oder werden durch die zumindest vier Anschläge ausgerichtet.

Ein weiterer Vorteil ist ein schneller und/oder einfacher Wechsel zwischen verschiedenen Formatgrößen von Substrat, da die zumindest eine Ausrichteinrichtung, insbesondere der Abstand zwischen den zumindest vier Anschlägen, individuell bevorzugt an jeden zugeführten Teilstapel angepasst und/oder anpassbar ist. Auf vorteilhafte Weise ist insbesondere bei unveränderter Formatgröße des Substrats eine Produktionsdauer von mehreren Stunden möglich.

Insbesondere zusätzlich wird auf vorteilhafte Weise ein alternatives Substrathandhabungssystem bzw. ein alternatives Verfahren zum Betreiben eines Substrathandhabungssystems geschaffen. Insbesondere wird ein teil- oder vollautomatisches System geschaffen, welches auf die vielfältigen Anforderungen anpassbar bzw. angepasst ist.

Weitere Vorteile sind aus der nachfolgenden Beschreibung ersichtlich.

Ausführungsbeispiele der Erfindung sind in den Zeichnungen dargestellt und werden im Folgenden näher beschrieben.

Es zeigen:

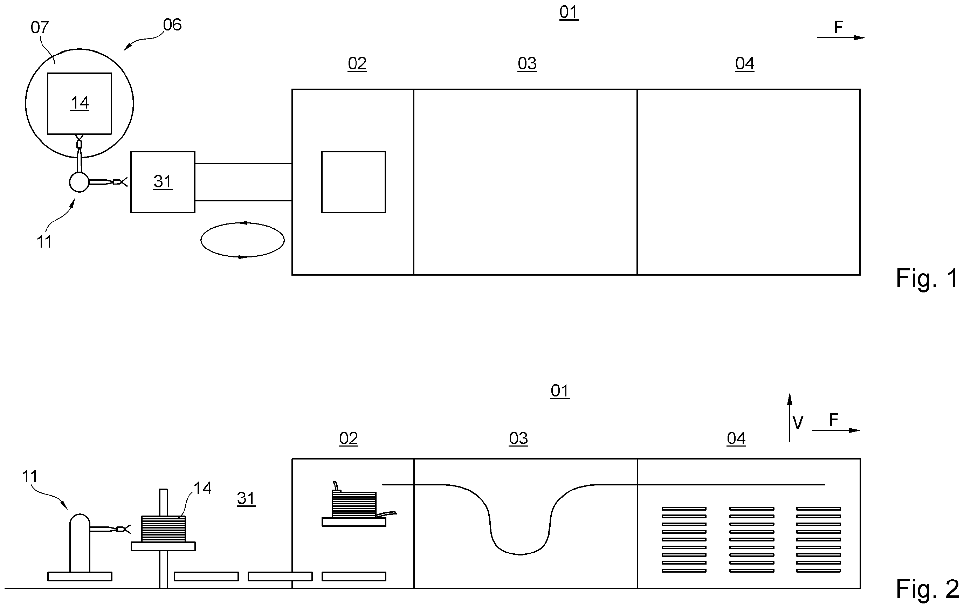

- Fig. 1: eine Draufsicht auf ein Substrathandhabungssystem mit Zufuhrsystem, Roboterzelle und Verarbeitungsmaschine;
- Fig. 2: eine seitliche Ansicht des Substrathandhabungssystems mit Verarbeitungsmaschine und Roboterzelle gemäß Fig. 1;
- Fig. 3: eine erste Ausführung einer beispielhaften Ausrichteinrichtung mit nachgeordnetem Anleger;
- Fig. 4: ein System zur automatischen Vorbereitung von Banknotenbogen;
- Fig. 5: ein Zufuhrsystem mit Logistiksystem zum Transport von Substratstapel enthaltenden Containern;
- Fig. 6: einem Substrathandhabungssystem zuführbare Substratstapel;
- Fig. 7: einen vom Substrathandhabungssystem bearbeiteten Substratstapel und gesammelte Stapelhilfen;
- Fig. 8: eine Vakuum-Zählscheibe zum Zählen von Substratbogen;
- Fig. 9: einen Zwei-Arm-Roboter mit Wechselgreifer;
- Fig. 10: eine Draufsicht auf eine Roboterzelle mit an einem Rahmen angeordneter Vakuum-Zählscheibe;
- Fig. 11: eine an einem Rahmen angeordnete Vakuum-Zählscheibe;
- Fig. 12: perspektivische Ansichten einer Vakuum-Zählscheibe;
- Fig. 13: Handhabungsschritte von Substratbogen durch Greifersysteme eines Zwei-Arm-Roboters;

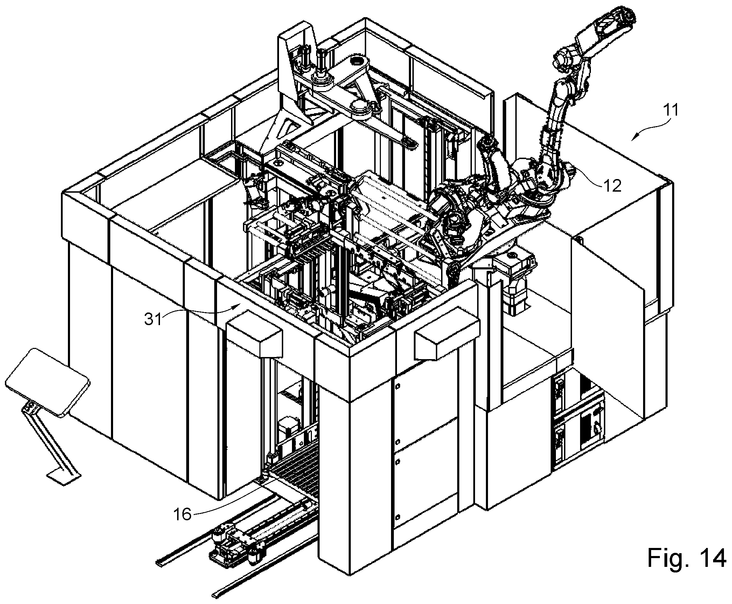

- Fig. 14: eine Roboterzelle mit zumindest einem Roboter und zumindest einer Ausrichteinrichtung in dreidimensionaler Ansicht;

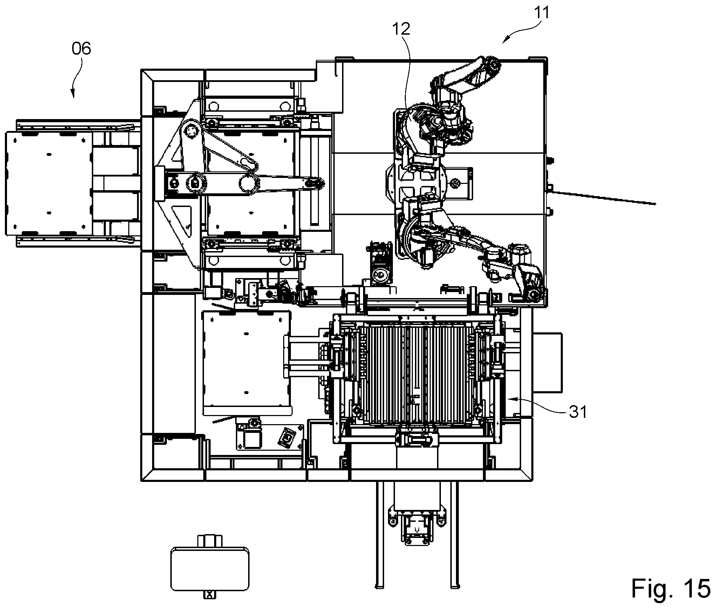

- Fig. 15: die Roboterzelle aus Fig. 14 in Draufsicht;
- Fig. 16: eine weitere beispielhafte Ausrichteinrichtung zu der in Fig. 3 dargestellten Ausrichteinrichtung mit zumindest vier Anschlägen in dreidimensionaler Ansicht von unten, wobei zwei Seitenanschläge jeweils ein Stützelement aufweisen;
- Fig. 17: die Ausrichteinrichtung entsprechend der Fig. 16 mit zumindest vier Anschlägen in einer weiteren dreidimensionalen Ansicht von unten;
- Fig. 18: die Ausrichteinrichtung entsprechend der Fig. 16 oder Fig. 17 mit zumindest vier Anschlägen in einer weiteren dreidimensionalen Ansicht von unten;
- Fig. 19: die Ausrichteinrichtung entsprechend der Fig. 16, Fig. 17 oder Fig. 18 mit zumindest vier Anschlägen in einer Seitenansicht;
- Fig. 20: eine alternative Ausrichteinrichtung mit zumindest vier Anschlägen in Draufsicht, wobei zwei Seitenanschläge und ein Hinteranschlag jeweils zumindest ein Stützelement aufweisen;
- Fig. 21: ein beispielhafter Seitenanschlag dargestellt als Explosionszeichnung.

Ein Substrathandhabungssystem umfasst zumindest eine Verarbeitungsmaschine 01. Vorzugsweise ist der zumindest einen Verarbeitungsmaschine 01 zumindest eine Ausrichteinrichtung 31 vorgeschalten. Beispielsweise ist der zumindest einen Verarbeitungsmaschine 01 zumindest eine Roboterzelle 11 vorgeschalten.

Die Verarbeitungsmaschine 01 ist eine als eine Bogenbearbeitungsmaschine 01 ausgebildete bogenverarbeitende Maschine, insbesondere eine Bogendruckmaschine. Die Verarbeitungsmaschine 01 ist bevorzugt als eine Bogenoffsetrotationsdruckmaschine oder als eine Flexo-Druckmaschine oder als eine Inkjet-Druckmaschine oder als eine Tintenstrahl-Druckmaschine, beispielsweise in Aggregat- und Reihenbauweise, ausgebildet. Die Verarbeitungsmaschine 01 ist weiter bevorzugt als eine Druckmaschine ausgebildet, welche zugeführtes Substrat, insbesondere bogenförmiges Substrat, beispielsweise Bedruckstoffbogen, verarbeitet, beispielsweise bedruckt und/oder lackiert und/oder nummeriert und/oder schneidet und/oder inspiziert. Bevorzugt wird das Substrathandhabungssystem zur Verarbeitung und/oder Bearbeitung von Wert- bzw. Banknotenmaterial eingesetzt.

Das Verarbeiten eines Substrates beschreibt im Vorangegangenen und im Folgenden das Verändern zumindest einer Eigenschaft des betreffenden Substrates wie beispielsweise dessen Lage und/oder physikalische Eigenschaften und/oder Materialeigenschaften. Das Bearbeiten eines Substrates beschreibt im Vorangegangenen und im Folgenden das Verändern zumindest einer Eigenschaft des betreffenden Substrates bezüglich dessen physikalischer Eigenschaften und/oder Materialeigenschaften, insbesondere dessen Masse und/oder Form und/oder Aussehen. Durch zumindest einen Bearbeitungsvorgang ist das Substrat in zumindest ein weiterverarbeitbares Zwischenprodukt und/oder Endprodukt überführbar. Bevorzugt ist die Bogenbearbeitungsmaschine 01 Substrat, insbesondere Bogen, beispielsweise Substratbogen, bearbeitend ausgebildet. Vorzugsweise weist der zu bearbeitende Bogen und/oder der durch die Bogenbearbeitungsmaschine 01 bereits bearbeitete Bogen, insbesondere der Substratbogen, zumindest zwei Nutzen, bevorzugt mindestens vier Nutzen, weiter bevorzugt eine Vielzahl von Nutzen auf.

Ein Substrat ist im Vorangegangenen und im Folgenden ein Material, welches durch die mindestens eine Bogenbearbeitungsmaschine 01 bearbeitbar ist, bevorzugt mit einem Medium, insbesondere einem Druckfluid, wie beispielsweise Tinten und/oder Druckfarben und/oder Lacken, oder weiteren Materialien, wie beispielsweise Toner oder Pulver, bedruckbar ist. Vorzugsweise ist das Substrat als Papier und/oder Pappe und/oder Folie, beispielsweise eine Kunststofffolie ausgebildet. Das Substrat ist dabei bevorzugt als Bogen ausgebildet. Insbesondere werden im Vorangegangenen und im Folgenden mit dem Begriff des Bogens sowohl solche Bogen bezeichnet, die noch nicht mittels der zumindest einen Bogenbearbeitungsmaschine 01 bearbeitet wurden, als auch solche Bogen, die bereits mittels der zumindest einen Bogenbearbeitungsmaschine 01 bearbeitet wurden und dabei gegebenenfalls in ihrer Form und/oder ihrer Masse verändert wurden. Der Begriff Nutzen bezeichnet im Vorangegangenen und im Folgenden bevorzugt die Anzahl gleicher Objekte, die aus dem gleichen Werkstoffstück gefertigt werden und/oder auf einem gemeinsamen Trägermaterial, beispielsweise einem gemeinsamen Bogen, angeordnet sind. Ein Nutzen ist vorzugsweise jener Bereich eines Bogens, welcher als ein Produkt der Bogenbearbeitungsmaschine 01, insbesondere als ein Zwischenprodukt zur Herstellung eines Endproduktes, ausgebildet ist und/oder beispielsweise zu einem gewünschten oder geforderten Endprodukt weiterverarbeitet wird und/oder weiterverarbeitbar ausgebildet ist. Bevorzugt ist hier das gewünschte oder geforderte Endprodukt, welches bevorzugt durch Weiterverarbeitung des jeweiligen Nutzens erzeugt wurde, eine Banknote und/oder ein Wertpapier. In einer bevorzugten Ausführung weist ein jeweiliger Bogen eine Formatgröße, also Ausdehnung in dessen Breite und Länge, von mindestens 200 mm x 200 mm (zweihundert Millimeter auf zweihundert Millimeter), bevorzugt von mindestens 300 mm x 300 mm (dreihundert Millimeter auf dreihundert Millimeter), weiter bevorzugt von mindestens 400 mm x 400 mm (vierhundert Millimeter auf vierhundert Millimeter) weiter bevorzugt von mindestens 450 mm x 450 mm (vierhundertfünfzig Millimeter auf vierhundertfünfzig Millimeter) auf. Bevorzugt weist ein jeweiliger Bogen eine Formatgröße von maximal 2.000 mm x 2.000 mm (zweitausend Millimeter auf zweitausend Millimeter), bevorzugt von maximal 1.500 mm x 1.500 mm (tausendfünfhundert Millimeter auf tausendfünfhundert Millimeter), weiter bevorzugt von maximal 1.000 mm x 1.000 mm (eintausend Millimeter auf eintausend Millimeter), weiter bevorzugt von maximal 850 mm x 850 mm (achthundertfünfzig Millimeter auf achthundertfünfzig Millimeter). Beispielsweise weist der Bogen jeweils ebenfalls eine rechtwinklige Formatgröße innerhalb der beschriebenen Toleranzen auf, wobei sich dessen Länge von dessen Breite unterscheidet. Beispielsweise alternativ liegt ein von dem rechtwinkligen Format verschiedenes Format der Bogen vor, beispielsweise mit Ecken von ungleich 90° (neunzig Grad).

Die insbesondere als Bogenbearbeitungsmaschine 01 ausgebildete Verarbeitungsmaschine 01 weist beispielsweise einen Anleger 02 auf, welchem bogenförmiges Substrat zuführbar ist und/oder zugeführt wird. Dem Anleger 02 schließt sich bevorzugt in Förderrichtung F, insbesondere in Förderrichtung F von Substrat, beispielsweise eine Anlage, ein oder mehrere Verarbeitungswerke oder die Bogen bearbeitenden Aggregate wie Druckwerke 03 und eine Auslage 04 an. Die Förderrichtung F von Substrat ist im Vorangegangenen und im Folgenden die Richtung, in welcher Substrat durch das Substrathandhabungssystem gefördert wird, insbesondere eine Richtung, welche entlang des Transportweges von einem ersten das Substrat aufweisenden insbesondere als Zufuhrsystem 06 ausgebildeten Objekt zu einem letzten das Substrat aufweisenden als Auslage 04 ausgebildetem Objekt des Substrathandhabungssystems zeigt.

Die Verarbeitungsmaschine 01 enthält bevorzugt ein nicht weiter dargestelltes Fördersystem, welches die zu verarbeitenden, beispielsweise zu bedruckenden und/oder zu lackierenden und/oder zu bearbeitenden, Substrate durch die Verarbeitungsmaschine 01 fördert. Das Fördersystem kann beispielsweise Förderbänder und/oder rotierende Bogenführungszylinder aufweisen, welche Bogenführungszylinder das Substrat mittels Greifern an der Vorderkante fixieren und/oder durch Öffnen und/oder Schließen der Greifer übergeben. Die Verarbeitungsmaschine 01 weist beispielsweise zusätzlich zumindest eine Wendeeinrichtung zum Wenden der Substrate auf.

In der Auslage 04 kann als Fördersystem beispielsweise ein Kettenfördersystem mit zwei jeweils seitlich am Gestell der Auslage 04 geführten Auslageketten ausgebildet sein, zwischen denen Greiferwagen angeordnet sind, welche das Substrat zu einem Auslagestapel fördern. Die Greiferwagen können dafür Bogenfixiersysteme aufweisen, mit denen die zu fördernden Substrate an der Vorderkante gegriffen werden können. Von den Auslageketten können die Greiferwagen auf einer Greiferwagenbahn in Förderrichtung F bis über den Auslagestapel geführt werden, wo die Greiferwagen die Substrate zur Ablage freigeben. In der Auslage 04 kann ein oder können auch mehrere Substratstapel 14 gebildet werden.

Das Substrathandhabungssystem weist neben der insbesondere als Bogenbearbeitungsmaschine 01 ausgebildeten Verarbeitungsmaschine 01 zum Verarbeiten und Bearbeiten gestapelter Substrate ein Zufuhrsystem 06 zur Zufuhr gestapelter Substrate, insbesondere Substratstapel 14, zur Verarbeitung und Bearbeitung durch die Verarbeitungsmaschine 01 auf. Das Zufuhrsystem 06 weist bevorzugt zumindest einen Bereitstellungsplatz 07 zur Bereitstellung von mindestens einem von der Verarbeitungsmaschine 01 zu verarbeitenden Substratstapel 14 aus einzeln gestapelten Substraten auf. Der Bereitstellungsplatz 07 des Substrates liegt dabei vorzugsweise derart im Bereich einer Roboterzelle 11, also einem Arbeitsbereich eines Industrieroboters, dass dieser das bereitgestellte Substrat handhaben kann. Das Zufuhrsystem 06 stellt dabei bevorzugt gestapelte Substrate bereit, welche beispielsweise auf einer palettenförmigen Unterlage gestapelt zugeführt werden. Die vom Zufuhrsystem 06 bereitgestellten Substratstapel 14 werden beispielsweise als Gesamtstapel oder auch als mittels Stapel- bzw. Trennhilfen getrennte Teilstapel zur Verfügung gestellt. Weiter werden die zur Verfügung gestellten Substratstapel 14 vorzugsweise verpackt bzw. versiegelt zur Verfügung gestellt. Die zur Verfügung gestellten Substratstapel 14 sind beispielsweise in einem vorangehenden Druckdurchgang bedruckt worden oder liegen alternativ als unbedruckte Substrate des Substratstapels 14 vor.

Beispielsweise ist an das Zufuhrsystem 06 anschließend mindestens ein Arbeitsplatz eines Bedieners angeordnet, welcher das zur Verfügung gestellte Substrat lockert und/oder einzelne Bogen beispielsweise innerhalb eines Teilstapels von Substrat voneinander trennt. In einer bevorzugten, beispielsweise alternativen Ausführung zu dem mindestens einen Arbeitsplatz des Bedieners weist das Substrathandhabungssystem bevorzugt zwischen dem Zufuhrsystem 06 und der Verarbeitungsmaschine 01 die Roboterzelle 11 auf, welche insbesondere einen bevorzugt als Zwei-Arm-Roboter 12 ausgebildeten Roboter 12 umfasst. Bevorzugt weist der Zwei-Arm-Roboter 12 zwei unabhängig voneinander bewegbare Arme mit jeweils zumindest einem Greifsystem 13 auf, welche jeweils besonders bevorzugt mindestens über zumindest zwei, bevorzugt zumindest drei, weiter bevorzugt zumindest vier, weiter bevorzugt sechs, Freiheitsgrade verfügen. Die Greifersysteme 13 des Zwei-Arm-Roboters 12 sind vorzugsweise zur Handhabung jeweils einer Mehrzahl von Substraten ausgebildet. Beispielsweise können die Greifersysteme 13 jeweils mindestens zwei Greiferfinger umfassen, welche zum Greifen aufeinander zu bewegbar ausgebildet sein können. Die Greifersysteme 13 können weiterhin über pneumatische Anschlüsse, insbesondere Blasluftdüsen, verfügen. Einem oder beiden Greifersystemen 13 kann auch eine Trennhilfe zum Einfahren in den Substratstapel 14 zugeordnet sein.

Das Zufuhrsystem 06 wird insbesondere derart betrieben, dass mit diesem wahlweise verschiedenartig gestapelte Substrate zuführbar sind. Das heißt insbesondere, dass durch das Zufuhrsystem 06 gestapelte Substrate in den Wirkbereich der Roboterzelle 11, insbesondere in den Greifbereich des Zwei-Arm-Roboters 12, oder in den Wirkbereich des mindestens einen Arbeitsplatzes gebracht werden. Dabei können durch das Zufuhrsystem 06 insbesondere Substratstapel 14 aus ungetrennt gestapelten Substraten oder aus durch Stapelhilfen getrennte Substrate zuführt werden. Die aus ungetrennten Substraten bestehenden Substratstapel 14 bzw. die Substratstapel 14 aus durch Stapelhilfen getrennten Substraten werden bevorzugt durch das Zufuhrsystem 06 gefördert und auf einem definierten Bereitstellungsplatz 07 positioniert. Beispielsweise können Stapelbretter 17 bzw. Distanzbleche 18 als Stapelhilfen verwendet werden. Stapelbretter 17 können beispielsweise in einem vorangehenden Druckdurchgang zum Trennen einzelner Teilstapel in den weiterzuverarbeitenden Substratstapel 14 eingefügt werden.

In der Roboterzelle 11, insbesondere mittels des Zwei-Arm-Roboters 12, oder an dem mindestens einen Arbeitsplatz kann jeweils ein Teilstapel des auf dem Bereitstellungsplatz 07 positionierten Substratstapels 14 ergriffen werden und damit die ergriffenen Substrate des Teilstapels vom restlichen Stapel getrennt werden. Dabei kann in der Roboterzelle 11 oder an dem mindestens einen Arbeitsplatz ein Teilstapel eines beispielsweise durch Stapelbretter 17 gebildeten Teilstapels gegriffen bzw. gehandhabt werden. Bei geeigneter Abmessung kann aber auch ein gesamter durch Stapelhilfen gebildeter Teilstapel gegriffen bzw. gehandhabt werden. Bevorzugt werden im Zusammenhang mit dem Ergreifen bzw. Trennen eines Teilstapels die einzelnen Substrate des Teilstapels untereinander getrennt, beispielsweise gelockert.

Insbesondere da die einzelnen Substrate des Teilstapels untereinander getrennt sind, ist bevorzugt nach dem Roboter 12 oder nach dem mindestens einen Arbeitsplatz die zumindest eine Ausrichteinrichtung 31 angeordnet. Die zumindest eine Ausrichteinrichtung 31 ist bevorzugt vor zumindest einem Druckwerk 03 der Bogenbearbeitungsmaschine 01 und/oder vor zumindest einem Anleger 02 der Bogenbearbeitungsmaschine 01 und/oder vor zumindest einem die Bogen bearbeitenden Aggregat und/oder in einem Zufuhrsystem 06 der Bogenbearbeitungsmaschine 01 und/oder innerhalb des Wirkbereichs der Roboterzelle 11 angeordnet. Bevorzugt wird der zumindest eine Teilstapel nach einem ersten Ausrichten, beispielsweise an dem Bereitstellungsplatz 07, insbesondere durch einen Bediener oder durch den Roboter 12 gelockert und dann in der Ausrichteinrichtung 31 wieder ausgerichtet. Bevorzugt wird der zumindest eine Teilstapel in der Ausrichteinrichtung 31 zusätzlich gelockert.

Der Anleger 02 der Verarbeitungsmaschine 01 ist vorzugsweise als Non-Stop-Anleger 02 ausgeführt, mittels welchem der Verarbeitungsmaschine 01 ununterbrochen Substratstapel 14 zur Verarbeitung zugeführt werden können. Ein solcher Non-Stop-Anleger 02 weist dafür bevorzugt einen Hilfsstapelträger mit Tragelementen auf, welche einen Reststapel durch eine Palette 16, insbesondere eine Non-Stop-Systempalette 16, hindurch untergreifen und zur weiteren Verarbeitung anheben. Während der Abarbeitung des Reststapels wird bevorzugt die leere Non-Stop-Systempalette 16 abgesenkt und ein neuer Substratstapel 14 eingesetzt. Dafür wird beispielsweise ein neuer insbesondere fertig gerüttelter und/oder ausgerichteter Substratstapel 14 auf einer weiteren Non-Stop-Systempalette 16 unter dem Reststapel eingefahren und durch eine Stapeltragplatte angehoben. Damit erfolgt bevorzugt durch den Non-Stop-Anleger 02 eine Stapelvereinigung unter Herausziehung der Tragelemente des Hilfsstapelträgers. Der Verarbeitungsmaschine 01 werden damit bevorzugt unterbrechungsfrei zu verarbeitende Substrate zugeführt.

Beim Betreiben des Substrathandhabungssystems erfolgt eine Zufuhr gestapelter Substrate bevorzugt mittels des Zufuhrsystems 06 zur Roboterzelle 11, welche die Substratstapel 14 zur Verarbeitung durch die Verarbeitungsmaschine 01 vorbereitet, welche die zugeführten Substrate insbesondere vollautomatisch weiter verarbeitet. Die zwischen dem Zufuhrsystem 06 und der Verarbeitungsmaschine 01 vorgesehene Roboterzelle 11 handhabt dabei bevorzugt mit Greifersystemen 13 jeweils eine Mehrzahl von Substraten, wobei durch das Zufuhrsystem 06 wahlweise verschiedenartig gestapelte Substrate zuführt werden. Es können dabei durch das Zufuhrsystem 06 Substratstapel 14 aus ungetrennt gestapelten Substraten oder aus durch Stapelhilfen getrennten Substraten zugeführt werden.

Das oder die Greifersysteme 13 der Roboterzelle 11, insbesondere der Zwei-Arm-Roboter 12, entfernen besonders bevorzugt Stapelhilfen aus zugeführten Substratstapeln 14. Dafür kann ein Ergreifen der Stapelhilfen mittels eines oder beider Greifersysteme 13 des Zwei-Arm-Roboters 12 erfolgen. Die Stapelhilfen können beispielsweise Stapelbretter 17 und/oder Distanzbleche 18 sein, welche insbesondere verschiedene Teilstapel des Substratstapels 14 zumindest bereichsweise voneinander mechanisch trennen. Mittels des oder der Greifersysteme 13 der Roboterzelle 11, insbesondere des Zwei-Arm-Roboters 12, werden die Stapelhilfen, insbesondere Stapelbretter 17 und/oder Distanzbleche 18, aus den die Stapelhilfen enthaltenden Substratstapeln 14 entfernt. Die Stapelhilfen werden entsprechend bevorzugt auf einem Sammelplatz und/oder in einem Sammelbehälter abgelegt.

Bevorzugt werden die Stapelhilfen wie Stapelbretter 17 und/oder Distanzbleche 18 aussortiert und/oder gesammelt. Zum Sammeln kann beispielsweise ein Sammelplatz und/oder ein Sammelbehälter vorgesehen sein, in welchem die Stapelhilfen, insbesondere Stapelbretter 17 und/oder Distanzbleche 18, von dem oder den Greifersystemen 13 der Roboterzelle 11, insbesondere des Zwei-Arm-Roboters 12, abgelegt werden. Die Stapelhilfen, insbesondere Stapelbretter 17 und/oder Distanzbleche 18, können beispielsweise mittels eines oder beiden Greifersystemen 13 des Zwei-Arm-Roboters 12 auf den Sammelplatz bzw. in den Sammelbehälter befördert werden. Es können auch mehrere beispielsweise für unterschiedliche Stapelhilfen vorgesehen Sammelplätze bzw. Sammelbehälter vorgesehen sein. Damit kann auch eine Trennung verschiedener Stapelhilfen bzw. verschiedener Arten von Stapelhilfen vorgenommen werden.

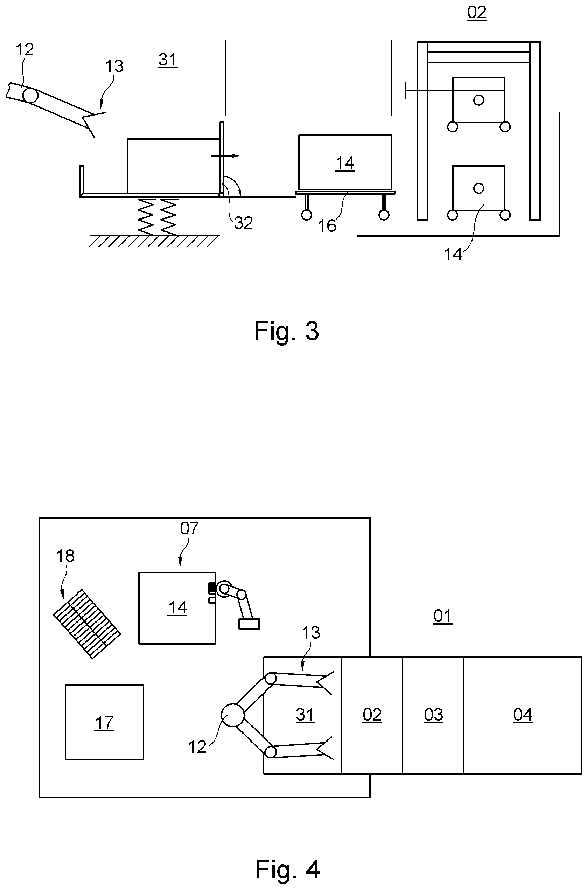

Die Fig. 4 zeigt beispielsweise ein Substrathandhabungssystem zur automatischen Vorbereitung insbesondere von Banknotenbogen im Produktionsprozess von oben. Von einem Zufuhrsystem 06 kann ein zu verarbeitender Substratstapel 14 einer Roboterzelle 11 zugeführt werden. Der Zwei-Arm-Roboter 12 kann mit seinen Greifersystemen 13 den vom Zufuhrsystem 06 auf dem Bereitstellungsplatz 07 bereitgestellten Substratstapel 14 handhaben. Weiterhin ist ein Lager für Stapelbretter 17 und/oder ein Lager für Distanzbleche 18 im Handhabungsbereich des Zwei-Arm-Roboters 12 vorgesehen. Der Zwei-Arm-Roboter 12 kann im Handhabungsbereich aufgenommene Teilstapel beispielsweise ausrichten und/oder drehen bzw. wenden. Beispielsweise können gegriffene Teilstapel um 180° gedreht werden.

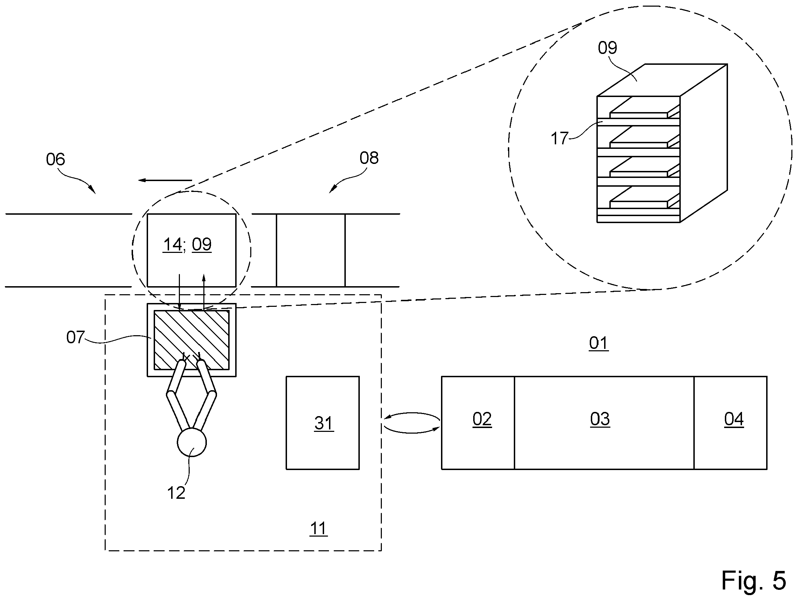

Die Fig. 5 zeigt eine Draufsicht eines Zufuhrsystems 06 mit Logistiksystem 08 insbesondere zum Transport von Substratstapel 14 enthaltenden Containern 09. Das Logistiksystem 08 kann beispielsweise Fördersysteme wie Förderbänder enthalten, welche Paletten 16 und/oder einen oder mehrere Container 09 verlagern können. Eine Palette 16 bzw. ein Container 09 kann dabei vom Logistiksystem 08 insbesondere automatisiert zum Bereitstellungsplatz 07 gefördert bzw. im Bereitstellungsplatz 07 positioniert werden.

Ein solcher Container 09 kann dabei zu verarbeitende Substratbogen enthalten. Bevorzugt werden durch den Container 09 mittels Stapelhilfen, insbesondere Stapelbrettern 17, getrennte Teilstapel zu Verfügung gestellt. Die Beschickung des Containers 09 mit Substratbogen bzw. mit Stapelbrettern 17 und Teilstapeln kann beispielsweise durch das Zufuhrsystem 06 oder vorgeordnet beispielsweise manuell oder automatisiert erfolgen. Ein derartig beschickter Container 09 mit Stapelbrettern 17 und Substratbogen kann beispielsweise auf ein Förderband gestellt werden. Mittels des Zufuhrsystems 06 fährt dieser Container 09 dann in die als Bereitstellungsplatz 07 ausgebildete Bereitstellungsposition zur Roboterzelle 11 zur automatisierten Stapelvorbereitung. Am Bereitstellungsplatz 07 kann dann jeweils ein Stapelbrett 17 mit jeweils einem Teilstapel, beispielsweise bestehend aus mindestens 100 bis maximal 500 Substratbogen, insbesondere durch den Zwei-Arm-Roboter 12 entnommen werden. Bevorzugt entnimmt der Zwei-Arm-Roboter 12 dabei vom Stapelbrett 17 den Teilstapel, bevorzugt die Substratbogen, und handhabt und/oder manipuliert (lüftet, lockert, etc.) diese. Vorzugsweise ist die Anzahl der gehandhabten Bogen abhängig von der Dicke der einzelnen Bogen und/oder der maximalen Öffnungsweite der Greifer des Greifersystems 13 des Roboters 12. Anschließend kann der Zwei-Arm-Roboter 12 das Stapelbrett 17 zurück in den Container 09 schieben oder auch einem Sammelplatz bzw. einem Sammelbehälter zuführen.

Bevorzugt kann eine leere Palette 16 bzw. ein leerer Container 09 durch ein oder das Logistiksystem 08 abgefördert bzw. entfernt werden. Dabei kann das Logistiksystem 08 derart ausgebildet sein, dass bereits eine neue Palette 16 bzw. ein neuer Container 09 zugeführt wird. Der Roboterzelle 11, insbesondere dem Zwei-Arm-Roboter 12, können so permanent zu handhabende Substrate auf Paletten 16 und/oder Containern 09 zur Verfügung gestellt werden.

Insbesondere kann eine Palette 16 mit einem Substratstapel 14 beispielsweise von einem Bediener auf ein Förderband des Logistiksystems 08 gestellt werden, welches die Palette 16 zur vertikalen Verlagerung einem Stellelement, insbesondere einem Hubelement, des Bereitstellungsplatzes 07 zuführt. Insbesondere wird die Palette 16 durch das Logistiksystem 08 in einen Hubrahmen im Bereich des Bereitstellungsplatzes 07 gefördert. Die Positionierung im Bereitstellungsplatz 07 kann dabei je nach Bogenformat erfolgen. Insbesondere kann über den Hubrahmen die Palette 16 auf eine Arbeitshöhe für den Zwei-Arm-Roboter 12 bzw. die Greifersysteme 13 angehoben werden. Der Zwei-Arm-Roboter 12 entnimmt insbesondere eine definierte Anzahl von Bogen je nach definiertem Griffmuster beispielsweise diagonal bzw. an der Vorderkante etc.. Dabei kann ebenfalls vorgesehen sein, die Substratbogen insbesondere bei einem Zählvorgang bzw. bei Entnahme durch Niederhalterelemente gegen verrutschen zu sichern. Beispielsweise kann dies durch zumindest ein im Bereich des Hubrahmens vorgesehenes bewegbares Niederhalterelement erfolgen. Dabei kann beispielsweise der jeweils oberste Substratbogen von oben durch ein oder mehrere Niederhalterelemente fixiert werden.

Nach Ergreifen der Substratbogen führt bevorzugt der Zwei-Arm-Roboter 12 "Auflocker- und Lüftungsbewegung" durch, während er die Substratbogen auf eine Ablageseite transportiert. Die Ablageseite ist bevorzugt bezüglich des Zwei-Arm-Roboters 12 beispielsweise in etwa rechtwinklig zum Bereitstellungsplatz 07 vorgesehen.

Bevorzugt werden die Substratbogen in Form zumindest eines Teilstapels aus mindestens zwei, bevorzugt mindestens 40 Bogen, und/oder aus vorzugsweise maximal 500 Bogen, bevorzugt maximal 200 Bogen, in der zumindest einen Ausrichteinrichtung 31 abgelegt. Vorzugsweise ist die Anzahl der Bogen abhängig von der Dicke der einzelnen Bogen und/oder Höhe des Teilstapels.

Beispielsweise werden die Substratbogen nach deren Aufenthalt in der zumindest einen Ausrichteinrichtung 31 auf einem Non-Stop-Rechen abgelegt. Der Non-Stop-Rechen bewegt sich bevorzugt insbesondere bei Ablage weiterer Teilstapel abwärts. Ist der auf dem Bereitstellungsplatz 07 positionierte Substratstapel 14 abgearbeitet, fährt der die gehandhabten Substratbogen tragende Non-Stop-Rechen bevorzugt auf eine am Boden befindliche neue Non-Stop-Systempalette 16. Bevorzugt wird der Non-Stop-Rechen vertikal, bevorzugt entgegen der vertikalen Richtung V, abgesenkt, bis dessen Tragstäbe in die Aussparungen der Non-Stop-Systempalette 16 eintauchen, so dass die Substratbogen an die Non-Stop-Systempalette 16 übergeben werden. Nach Entfernung eines für den Non-Stop-Rechen vorgesehenen vorderen Tragbalkens kann die die von der Verarbeitungsmaschine 01 zu verarbeitenden Substratbogen tragende Non-Stop-Systempalette 16 bevorzugt automatisiert entnommen werden. Insbesondere wird auch die leere Palette 16 bzw. der leere Container 09 auf der Eingangsseite der Roboterzelle 11, insbesondere auf dem Bereitstellungsplatz 07, entfernt. Beispielsweise können leere Paletten 16 unter den Zwei-Arm-Roboter 12 insbesondere in ein Magazin, befördert werden. Dies kann ebenfalls durch das Logistiksystem 08 oder einen Bediener erfolgen.

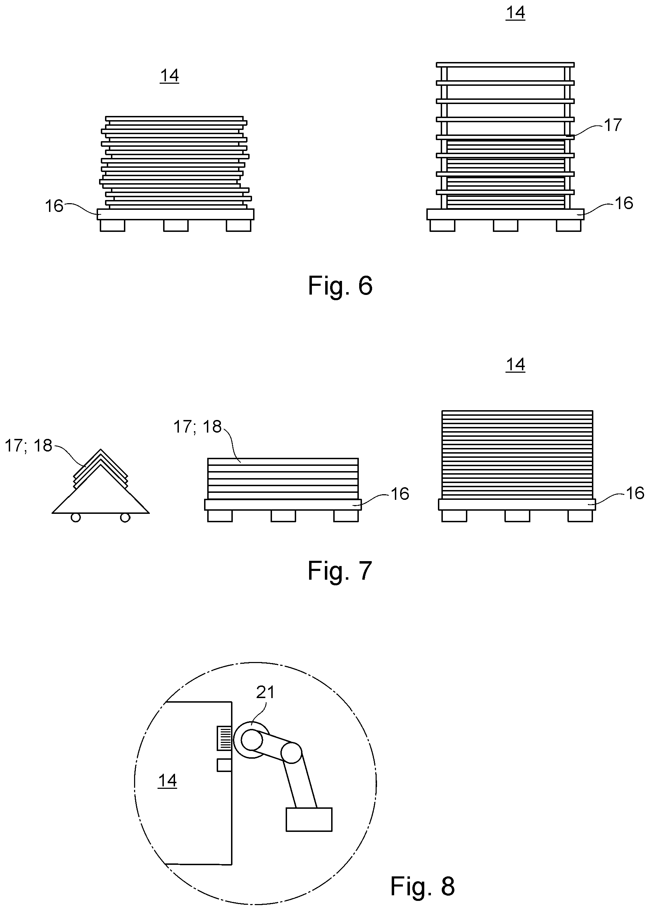

Die Fig. 6 zeigt beispielsweise im Substrathandhabungssystem vom Zufuhrsystem 06 zugeführte Substratstapel 14 auf einer Non-Stop-Systempalette 16. Links ist dabei ein nicht vorbereiteter Substratstapel 14 dargestellt, wie dieser durch das Zufuhrsystem 06 zur Roboterzelle 11 oder dem Arbeitsplatz gefördert werden kann. Beispielsweise kann der Substratstapel 14 schiefe bzw. wellige Kanten aufweisen und/oder überstehende Einzel- oder Mehrfachbogen enthalten. Rechts ist ein durch beispielhaft angedeutete Bogen gebildeter Substratstapel 14 mit Stapelhilfen dargestellt. Beispielsweise kann der Substratstapel 14 durch Stapelbretter 17 und/oder Distanzbleche 18 getrennte Teilstapel enthalten.

Die Fig. 7 zeigt beispielsweise einen vom Substrathandhabungssystem bearbeiteten Substratstapel 14 und gesammelte Stapelhilfen, beispielsweise Stapelbretter 17 bzw. Distanzbleche 18. Der bearbeitete Substratstapel 14 kann auf einer Palette 16 bzw. Non-Stop-Systempalette 16 von der Roboterzelle 11 oder den Bediener oder durch die Verarbeitungsmaschine 01 bereitgestellt werden. Der Substratstapel 14 kann dabei bevorzugt als ausgerichteter Substratstapel 14 ohne zwischengefügte Stapelhilfen wie Stapelbretter 17 und/oder Distanzbleche 18 bereitgestellt werden. Bei ursprünglich vorhandenen Stapelhilfen können diese von einem Sammelbehälter bzw. einem Sammelplatz insbesondere zur Wiederverwendung bereitgehalten werden. Beispielsweise können Stapelbretter 17 und/oder die Distanzbleche 18 ebenfalls auf einer Palette 16 gesammelt werden. Die Stapelbretter 17 und/oder die Distanzbleche 18 können beispielsweise zusätzlich oder alternativ in einem Lager bereitgestellt werden. Mittels eines Logistik- bzw. Transportsystems können die fertigen Substratstapel 14 und/oder die gesammelten Stapelhilfen, insbesondere auf einer Palette 16 beispielsweise gestapelte Stapelbretter 17 und/oder beispielsweise in einem Behälter gesammelte Distanzbleche 18, automatisiert verlagert bzw. transportiert werden.

Eine Anlieferung eines neuen Substratstapels 14 im Substrathandhabungssystem erfolgt durch das Zufuhrsystem 06 auf dem definierten Bereitstellungsplatz 07. Dabei kann der Substratstapel 14 von einer weiteren Verarbeitungsmaschine, beispielsweise wie oben beschrieben, erzeugt bzw. gebildet worden sein. Bevorzugt werden bei der Handhabung der Substratstapel 14 durch die Roboterzelle 11 Teilstapel aus den zugeführten Substratstapeln 14 gegriffen und die Substrate des jeweiligen Teilstapels gehandhabt, insbesondere getrennt und/oder gelockert und/oder gelüftet. Dabei kann ein zugeführter Substratstapel 14 im Substrathandhabungssystem auch sensorisch erfasst und entsprechend den Sensorwerten gehandhabt werden. Die Roboterarme bzw. Greifersysteme 13 der Roboterzelle 11, insbesondere des Zwei-Arm-Roboters 12, werden dabei bevorzugt in Abhängigkeit der ermittelten zugeführten Substratstapel 14 nach vorgegebenen Handlungsanweisungen gesteuert oder geregelt.

Auf dem definierten Bereitstellungsplatz 07 platzierte Substratstapel 14 werden bevorzugt ggf. nach einem Freigabe- oder Startsignal durch bevorzugt optische Messsysteme einer Stapel-Eingangskontrolle unterzogen. Beispielsweise kann die Prüfung der Geometrie des Substratstapels 14 (Format und/oder Größe der Ladungsträger und/oder Höhe und/oder Welligkeit etc.) und/oder die Prüfung der Stapelqualität (z. B. auf herausstehende Bogen) durchgeführt werden. Die Geometrie des Substratstapels 14 kann mittels eines optischen Messsystems, beispielsweise mittels einer Kamera, insbesondere 3D-Kamera, und/oder eines Laserscanners, erfasst und mit einem Ideal verglichen werden. Sind dabei die Abweichungen größer als definiert, kann der betreffende Substratstapel 14 vom System zurückgewiesen werden bzw. nicht zur Verarbeitung freigegeben werden. Es ist außerdem möglich, dass das System den Substratstapel 14 bis zu der vom Ideal abweichenden Stelle bzw. Position verarbeitet und dann den Bediener informiert, damit dieser das vorhandene Problem löst (z. B. bei einem herausragenden einzelnen Bogen). Anschließend kann dann der Substratstapel 14 weiter vom System verarbeitet werden.

Bevorzugt kann dabei oder in diesem Zusammenhang eine Bogenerkennung bevorzugt mit Übermittlung ermittelter Daten an die Roboterzelle 11 und/oder die Verarbeitungsmaschine 01, insbesondere eine Druckmaschine, erfolgen. Besonders bevorzugt kann eine Erkennung des oberen Substratbogens ggf. mit einer Ermittlung einer zugehörigen Losnummer erfolgen. Daraus kann insbesondere das Wissen über alle im aktuellen Los vorhandener Bogen bzw. Substrate resultieren. Bevorzugt erfolgt eine Übermittlung dieser Informationen an die Verarbeitungsmaschine 01, beispielsweise Druckmaschine, insbesondere wenn diese Inline angebunden ist. Alternativ oder zusätzlich kann eine Speicherung beispielsweise zu Dokumentationszwecken insbesondere im System erfolgen.

Weiter kann ein Zählen von Bogen bzw. Substraten durchgeführt werden. Insbesondere kann die Bogenzählung mechanisch erfolgen. Dabei können die Substratbogen mittels eines mechanischen Fühlers, welcher an einer Linearachse oder einem Roboterarm bzw. einem Greifersystem 13 oder einem separaten Arm befestigt ist, auf einen zuvor eingestellten Wert abgezählt werden. Zum Beispiel in der Endverarbeitung kann eine exakte Anzahl an Substratbogen notwendig sein. Dies erfolgt insbesondere mit mechanischen Vakuum-Zählscheiben 21 und kann nicht über indirekte Messung (Stapelhöhe, optische Merkmale, etc.) erfolgen. Weiter kann diese Zählung zwecks lückenloser Nachverfolgbarkeit der Substrate bzw. Bedruckstoffe eingesetzt werden.

Die Fig. 8 zeigt beispielsweise eine Vakuum-Zählscheibe 21, welche im Substrathandhabungssystem, insbesondere in der Roboterzelle 11, zur bogengenauen Zählung der Substratbogen eingesetzt werden kann. In diesem Zusammenhang bzw. gleichzeitig kann über ein Messsystem ein dem Substratstapel 14 zugeordnetes Merkmal wie eine Losnummer erkannt werden.

Ein Separieren der Substratbogen mittels der Greifersysteme 13 vom Substratstapel 14 kann derart erfolgen, dass eine Anzahl genau gezählter Substratbogen vom Substratstapel 14 separiert und anschließend gegriffen wird. Für einen Zählvorgang kann dabei beispielsweise eine Lücke im Substratstapel 14 gebildet werden, wobei insbesondere eine beispielsweise keilförmig ausgeführte Platte einen Teilstapel vom Hauptstapel trennen kann. Dabei kann der zu zählende Teilstapel während des Zählvorgangs auch über die komplette Bogenbreite auf der Platte aufliegen. Anschließend kann über ein Messsystem, insbesondere die Vakuum-Zählscheibe 21, die definierte Anzahl an Substratbogen abgezählt und dabei bevorzugt abgetrennt bzw. zum Greifen separiert werden. Wenn nicht gezählt wurde, kann eine ungefähre Menge an Substratbogen entnommen bzw. gegriffen werden. Diese Menge kann aber auch z. B. durch eine optische Höhenmessung ermittelt werden.

Je nach zugeführtem Substrat kann in der Roboterzelle 11, insbesondere vom Zwei-Arm-Roboter 12, eine zuvor insbesondere vom Bediener festgelegte Bewegung mit den Substratbogen ausgeführt werden. Diese Bewegung kann insbesondere zum Aufbrechen bzw. Entblocken der Substratbogen genutzt werden. Beispielsweise können derartige Informationen aus den detektierten Merkmalen wie der Losnummer ermittelt werden.

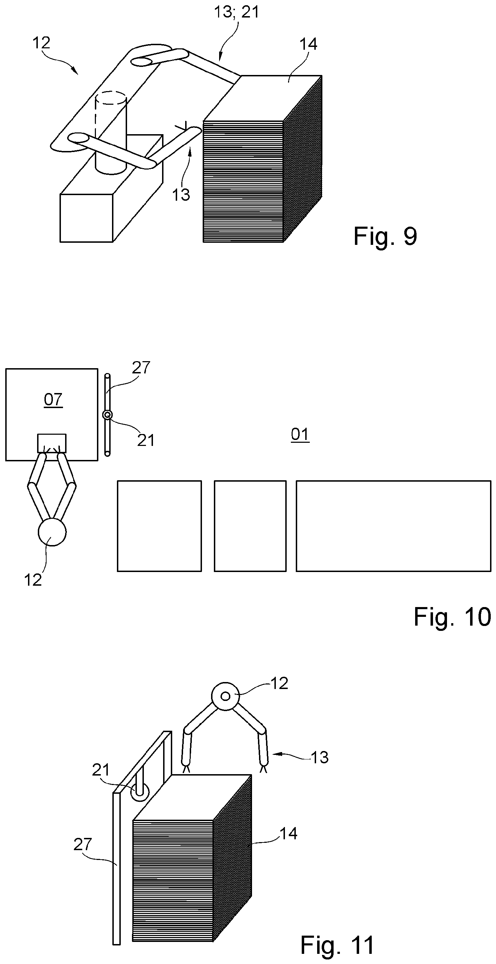

Beispielsweise ist eine Vakuum-Zählscheibe 21 als Wechselgreifer direkt am Roboter 12 bzw. an einem Roboterarm angeordnet. Entsprechend kann dabei die Vakuum-Zählscheibe 21 aktiviert bzw. in Stellung gebrachten werden, so dass der Zwei-Arm-Roboter 12 mit der Vakuum-Zählscheibe 21 in den Substratstapel 14 fahren kann, beispielsweise dargestellt in Fig. 9. Die Vakuum-Zählscheibe 21 bzw. der Roboterarm hält dabei nach einer definierten Anzahl an Substratbogen an. Anschließend kann beispielsweise der Substratstapel 14 nach unten fahren bzw. bewegt sich der Roboterarm mit der Vakuum-Zählscheibe 21 nach oben, derart, dass durch die Relativbewegung eine Lücke entsteht. Anschließend kann ein Greifersystem 13, beispielsweise das gegenüberliegende Greifersystem 13 des Zwei-Arm-Roboters 12, in den Substratstapel 14 greifen und den abgezählten Teilstapel handhaben. Es kann der den Wechselgreifer aufweisende Arm des Zwei-Arm-Roboters 12 in dieser Zeit beispielsweise mit einem Greifer-Revolver am Arm oder extern das Werkzeug wechseln und bei der Separierung weiter fortfahren.

In einer alternativen Ausführung ist die Vakuum-Zählscheibe 21 beispielsweise an einem Rahmen 27 angeordnet, beispielsweise dargestellt in Fig. 10. Der Rahmen 27 kann beispielsweise benachbart des Bereitstellungsplatzes 07 vorgesehen sein und starr oder auch beweglich ausgeführt werden. Der Rahmen 27 kann beispielsweise eine oder mehrere Linearachsen zur beweglichen Aufnahme einer Vakuum-Zählscheibe 21 enthalten.

Die Fig. 11 zeigt eine am Rahmen 27 angeordnete Vakuum-Zählscheibe 21 zum Zählen der Substratbogen des Substratstapels 14. Die Vakuum-Zählscheibe 21 ist hierbei extern an dem Rahmen 27 bzw. Halter angebracht. Die bewegbare Vakuum-Zählscheibe 21 fährt in den Substratstapel 14 bis eine definierte Anzahl an Substratbogen erreicht ist. Der zwischen zwei unmittelbar benachbarte Substratbogen eingeschobene mechanische Fühler fährt anschließend ein Stück hoch und/oder es wird der Substratstapel 14 ein Stück abwärts bewegt, derart, dass durch die Relativbewegung eine Lücke entsteht. Anschließend kann ein oder können beide Greifersysteme 13 des Zwei-Arm-Roboters 12 in den Substratstapel 14 greifen und den abgezählten Teilstapel greifen und handhaben.

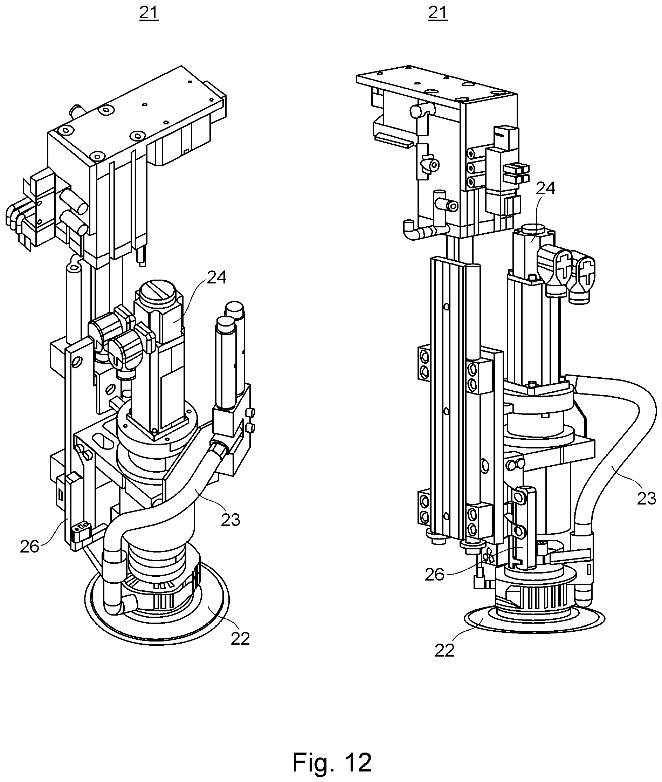

Die Fig. 12 zeigt perspektivische Ansichten einer Vakuum-Zählscheibe 21 zum bogengenauen Abzählen der zu handhabenden Substrate. Mittels eines zwischen die Substrate einfahrenden mechanischen Fühlers, insbesondere einer Zählscheibe 22, werden die Substrate bogengenau gezählt und im Falle einer ausreichenden bzw. vorgesehenen Anzahl zur Bildung einer Lücke getrennt. Die Vakuum-Zählscheibe 21 kann dabei an einem Arm des Zwei-Arm-Roboters 12 oder am separaten Rahmen 27 oder auch einem separaten Arm vorgesehen sein.

Eine Vakuum-Zählscheibe 21 kann beispielsweise einen Motor 24 aufweisen, welcher die Zählscheibe 22 rotatorisch antreibt. Mittels eines Vakuumschlauches 23 kann dabei der Zählscheibe 22 ein Unterdruck zugeführt werden, welcher an der Unterseite der Zählscheibe 22 zum Ansaugen und Anheben des obersten Substratbogens genutzt wird. Die rotierend angetriebene Zählscheibe 22 weist an ihrem Umfangsrand wenigstens eine nicht weiter dargestellte spezielle Aussparung auf, um während ihrer Rotation jeden Substratbogen einzeln zu erfassen. Dabei wird insbesondere über eine Messeinrichtung 26 die Zählscheibenposition bestimmt. Da die Zählscheibe 22 während des Zählvorganges jeden Substratbogen einzeln untergreift kann bei einer definierten Anzahl von Substratbogen eine Lücke zum Handhaben des abgezählten Teilstapels durch den Zwei-Arm-Roboter 12 erzeugt werden.

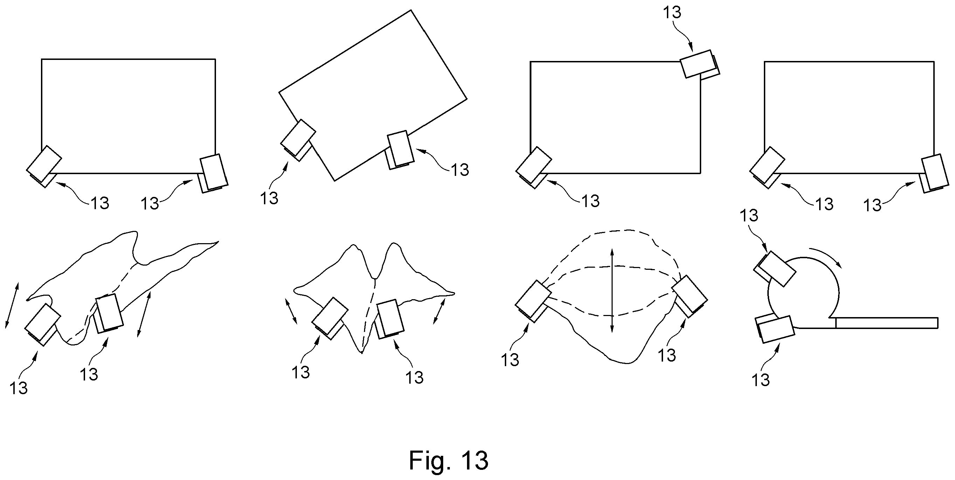

Die Fig. 13 zeigt einige durchführbare Bewegungen des Zwei-Arm-Roboters 12 für verschiedene Anwendungsfälle und Substrate. Die Auswahl der durchzuführenden Bewegungen kann beispielsweise vorgegeben sein bzw. aus Messwerten geschlossen werden. Außerdem können die Substratbogen vor dem Ablegen vertikal durch eine Konstruktion von zwei parallelen Rohren hindurchbewegt werden, die die definierte Anzahl an Substratbogen bevorzugt kontinuierlich während der Aufwärtsbewegung von vorn und hinten insbesondere abwechselnd biegt. Die dadurch entstehende Relativbewegung zwischen den einzelnen Substratbogen kann damit einen weiteren Separierungsschritt darstellen.

Weiterhin kann auch ein Lüften der Substratbogen durchgeführt werden, beispielsweise während die Substratbogen durch die Greifersysteme 13 des Zwei-Arm-Roboters 12 entblockt werden. Dabei kann insbesondere Luft zwischen die Substratbogen geblasen werden, während die Substratbogen mittels der Greifersysteme 13 des Zwei-Arm-Roboters 12 durch die definierte Bewegung entblockt werden. Dadurch, dass die Substratbogen nur an zwei definierten Stellen durch die Greifersysteme 13 gehalten werden, "schwimmt" die Lage der Substratbogen auf.

Ein Ablegen, Sammeln und Ausrichten der Substratbogen erfolgt bevorzugt durch die Ablage der gegriffenen Teilstapel in der zumindest einen Ausrichteinrichtung 31. Dies stellt sicher, dass die Substratbogen registerhaltig auf einer der Ausrichteinrichtung 31 in Förderrichtung F nachgeordneten Palette 16 bzw. Non-Stop-Systempalette 16 positioniert werden. Vorzugsweise werden die Substratbogen in der Ausrichteinrichtung 31 in zumindest einem Teilstapel von bevorzugt mindestens 40 Bogen, weiter bevorzugt von mindestens 100 Bogen, weiter bevorzugt von mindestens 150 Bogen, gesammelt und ausgerichtet. Beispielsweise werden die Substratbogen in der Ausrichteinrichtung 31 in zumindest einem Teilstapel von bevorzugt maximal 500 Bogen, weiter bevorzugt von maximal 300 Bogen, weiter bevorzugt von maximal 250 Bogen, gesammelt und ausgerichtet. Vorzugsweise ist die Anzahl der Bogen dabei abhängig von deren Dicke und/oder der Höhe zumindest eines Anschlags 32; 33; 34 der Ausrichteinrichtung 31.

Vorzugsweise in Förderrichtung F nach der zumindest einen Ausrichteinrichtung 31, bevorzugt direkt im Anschluss, weiter bevorzugt ohne eine weitere verarbeitende oder bearbeitende Einrichtung dazwischen, werden Bogen von zumindest zwei Teilstapeln gesammelt und mindestens ein Ries gebildet. Vorzugsweise umfasst das Ries im vorliegenden Fall mindestens 50, bevorzugt mindestens 200, weiter bevorzugt mindestens 400 Bogen und/oder maximal 700, bevorzugt maximal 600, weiter bevorzugt maximal 500, Bogen. Beispielsweise werden mindestens zwei Riesen gesammelt, wodurch ein Substratstapel 14 von mindestens 1.000 (eintausend) Bogen, bevorzugt von mindestens 2.000 Bogen, und/oder von maximal 10.000 Bogen, bevorzugt von maximal 8.000 Bogen gebildet wird. Anschließend erfolgt bevorzugt der Transfer der gesammelten Substratbogen auf eine Palette 16 bzw. Non-Stop-Systempalette 16 und eine Zuführung der Palette 16 bzw. Non-Stop-Systempalette 16 oder des gebildeten Substratstapels 14 in den Anleger 02 bzw. Non-Stop-Anleger 02 der Verarbeitungsmaschine 01. Dies kann ohne weitere Manipulation vom Bediener zum direkten Stapelwechsel im Anleger 02 bzw. Non-Stop-Anleger 02 der Verarbeitungsmaschine 01, insbesondere Druckmaschine oder Endverarbeitungsmaschine beispielsweise zum Schneiden und/oder Inspizieren, durchgeführt werden.

Das Substrathandhabungssystem weist die zumindest eine Ausrichteinrichtung 31 und die zumindest eine Bogenbearbeitungsmaschine 01 auf. Es wird zumindest ein Teilstapel von Substrat in der zumindest einen Ausrichteinrichtung 31 zumindest zeitweise abgelegt und/oder gelockert und/oder ausgerichtet.

Ausrichten beschreibt im Vorangegangenen und im Folgenden insbesondere, dass die Kanten von mindestens einem Substrat in einer beispielsweise durch zumindest einen Anschlag 32; 33; 34 festgelegten Position positioniert werden. Bevorzugt beschreibt das Ausrichten zusätzlich oder alternativ, dass mindestens zwei insbesondere bogenförmige Substrate übereinander, bevorzugt exakt übereinander, angeordnet werden. So besitzt ein ausgerichteter Teilstapel bevorzugt eine Mehrzahl von Bogen, welche vorzugsweise exakt übereinander, also bezüglich deren Länge und Breite auf derselben Position, angeordnet sind. Lockern beschreibt im Vorangegangenen und im Folgenden insbesondere, dass einzelne Bogen des Teilstapels voneinander lösbar und/oder trennbar sind, insbesondere ohne eine Haftung an zumindest einem weiteren Bogen des Teilstapels.

Bevorzugt ist die zumindest eine Ausrichteinrichtung 31 in Förderrichtung F vor der Bogenbearbeitungsmaschine 01, insbesondere vor dem zumindest einen Druckwerk 03 der Bogenbearbeitungsmaschine 01 und/oder vor dem zumindest einen Anleger 02 der Bogenbearbeitungsmaschine 01 und/oder vor dem zumindest einen die Bogen bearbeitenden Aggregat und/oder in dem Zufuhrsystem 06 der Bogenbearbeitungsmaschine 01 und/oder innerhalb des Wirkbereichs der Roboterzelle 11 angeordnet.

Vorzugsweise ist angrenzend zu der zumindest einen Ausrichteinrichtung 31 der zumindest eine Roboter 12 angeordnet, wobei der zumindest eine Roboter 12 eine Mehrzahl von Bogen, insbesondere zumindest einen Teilstapel von Bogen, zu der zumindest einen Ausrichteinrichtung 31 zuführend ausgebildet ist. Beispielsweise ist dazu die zumindest eine Ausrichteinrichtung 31 innerhalb der Roboterzelle 11 angeordnet. Beispielsweise alternativ ist ein Bediener zumindest einen Bogen, bevorzugt eine Mehrzahl von Bogen, insbesondere zumindest einen Teilstapel von Bogen, beispielsweise mindestens einen Substratstapel 14, zu der zumindest einen Ausrichteinrichtung 31 zuführend ausgebildet.

Ohne weitere Elemente oder Einrichtungen dazwischen ist unterhalb der zumindest einen Ausrichteinrichtung 31 und/oder unterhalb zumindest eines Stützelements 41 und/oder unterhalb einer Ausrichtebene mindestens eine Palette 16 und/oder mindestens ein Gabelsystem und/oder mindestens eine Platte und/oder mindestens ein zumindest zeitweise einen Boden erzeugendes Objekt angeordnet.

Die zumindest eine Ausrichteinrichtung 31 umfasst zumindest vier Anschläge 32; 33; 34. Die zumindest eine Ausrichteinrichtung 31 umfasst zumindest vier Anschläge 32; 33; 34. Bevorzugt umfasst die zumindest eine Ausrichteinrichtung 31 genau vier Anschläge 32; 33; 34. Bevorzugt weist die Ausrichteinrichtung 31 mindestens drei Anschläge, zumindest einen Hinteranschlag 34 und zumindest zwei Seitenanschläge 33, auf. Dabei ist zumindest ein Anschlag 32 als Vorderanschlag 32 und zumindest ein Anschlag 34 als Hinteranschlag 34 und mindestens zwei Anschläge 33 jeweils als Seitenanschlag 33 ausgebildet. Bevorzugt umfasst die Ausrichteinrichtung 31 genau einen Vorderanschlag 32 und genau einen Hinteranschlag 34 und genau zwei Seitenanschläge 33.

Beispielsweise ist der zumindest eine Vorderanschlag 32 einer ersten Kante zumindest eines Bogens, beispielsweise des zumindest einen Teilstapels, zugeordnet. Bevorzugt ist der Vorderanschlag 32 einer Vorderkante zumindest eines Bogens, beispielsweise des zumindest einen Teilstapels, zugeordnet. Die Vorderkante ist bevorzugt eine Kante des Bogens, welche der ersten Kante des Bogens entlang einer Richtung entspricht, in welche Richtung der zumindest eine Bogen durch die Bogenbearbeitungsmaschine 01 transportiert wird. Beispielsweise ist der zumindest eine Hinteranschlag 34 einer zweiten Kante zumindest eines Bogens, beispielsweise des zumindest einen Teilstapels, zugeordnet. Bevorzugt ist der Hinteranschlag 34 einer Hinterkante zumindest eines Bogens, beispielsweise des zumindest einen Teilstapels, zugeordnet. Die Hinterkante ist bevorzugt eine Kante des Bogens, welche der letzten Kante des Bogens entlang einer Richtung entspricht, in welche Richtung der zumindest eine Bogen durch die Bogenbearbeitungsmaschine 01 transportiert wird. Beispielsweise sind die zumindest zwei Seitenanschläge 33 jeweils einer dritten Kante, bevorzugt Seitenkante, zumindest eines Bogens, beispielsweise des zumindest einen Teilstapels, zugeordnet. Bevorzugt steht die Seitenkante jeweils orthogonal zu der Richtung, in welche Richtung der zumindest eine Bogen durch die Bogenbearbeitungsmaschine 01 transportiert wird.

Beispielsweise ist zumindest einer der Anschläge 32; 33; 34 unterteilt. Das heißt, dass der zumindest eine Anschlag 32; 33; 34 mindestens zwei, bevorzugt mindestens drei, voneinander verschiedene, beispielsweise räumlich getrennte, Einheiten aufweist. Die voneinander verschiedenen Einheiten bilden bevorzugt den zumindest einen Anschlag 32; 33; 34. Beispielsweise sind alle Einheiten eines Anschlags 32; 33; 34 entlang einer Geraden, beispielsweise entlang einer Seite eines Rahmens 47 der Ausrichteinrichtung 31, hintereinander angeordnet. Beispielsweise sind alle Einheiten eines Anschlags 32; 33; 34 der selben Kante des zumindest einen Teilstapels von Bogen zugeordnet und/oder entlang einer Kante eines in der Ausrichteinrichtung angeordneten Bogens hintereinander angeordnet.

Dabei sind jeweils zumindest zwei Anschläge 32; 33; 34 zueinander gegenüberliegend angeordnet. Der zumindest eine Vorderanschlag 32 und der zumindest eine Hinteranschlag 34 sind zueinander gegenüberliegend angeordnet. Es sind die mindestens zwei Seitenanschläge 33 zueinander gegenüberliegend angeordnet. Dabei sind bevorzugt jeweils die mindestens zwei Seitenanschläge 33 zu dem zumindest einen Vorderanschlag 32 und/oder dem zumindest einen Hinteranschlag 34 orthogonal angeordnet. Beispielsweise alternativ, insbesondere bei einem nicht-rechtwinkligen Format der Bogen, weisen die mindestens zwei Seitenanschläge 33 zu dem zumindest einen Vorderanschlag 32 und/oder zu dem zumindest einen Hinteranschlag 34 einen Winkel verschieden von 90° (neunzig Grad) auf, beispielsweise mindesten 30° und/oder maximal 80°, insbesondere passend zu dem jeweiligen Format der Bogen.

Vorzugsweise sind die zumindest vier Anschläge 32; 33; 34 in einer Ausrichtebene angeordnet. Die Ausrichtebene entspricht bevorzugt einer Ebene, wobei ein unterster Bogen des zumindest einen durch die Ausrichteinrichtung 31 auszurichtenden Teilstapels bei dessen Positionierung in der Ausrichteinrichtung 31 in der Ausrichtebene angeordnet ist und/oder angeordnet wird.

Es ist bevorzugt jeweils eine eine Grundfläche erzeugende untere Begrenzung des jeweiligen Anschlags 32; 33; 34 aufgespannt durch eine Länge und eine Breite des jeweiligen Anschlags 32; 33; 34 in der Ausrichtebene angeordnet. Zumindest ein Anschlag 32; 33; 34, bevorzugt jeder, der zumindest vier Anschläge 32; 33; 34 weist bevorzugt die Grundfläche auf. Die Grundfläche entspricht vorzugsweise einer unteren Begrenzung des zumindest einen Anschlags 32; 33; 34 in vertikaler Richtung V. Die untere Begrenzung entspricht bevorzugt der maximalen Ausdehnung des zumindest einen Anschlags 32; 33; 34 der zumindest vier Anschläge 32; 33; 34 entgegen der vertikalen Richtung V. Bevorzugt zusätzlich oder alternativ ist die untere Begrenzung vorzugsweise in einer Ebene orthogonal zu der Höhe des zumindest einen Anschlags 32; 33; 34 der zumindest vier Anschläge 32; 33; 34 durch die Länge und die Breite des zumindest einen Anschlags 32; 33; 34 aufgespannt. Die Grundfläche des zumindest einen Anschlags 32; 33; 34 der zumindest vier Anschläge 32; 33; 34 ist bevorzugt in der Ausrichtebene angeordnet. Bevorzugt zusätzlich oder alternativ ist die Ausrichtebene durch die Grundfläche aufgespannt. Weiter bevorzugt sind die Grundflächen der zumindest vier Anschläge 32; 33; 34 in der Ausrichtebene angeordnet und/oder ist die Ausrichtebene durch die Grundflächen aufgespannt.

Zumindest ein Anschlag 32; 33; 34, bevorzugt jeder, der zumindest vier Anschläge 32; 33; 34 weist vorzugsweise eine Länge und eine Breite und eine Höhe auf. Vorzugsweise entspricht die Höhe einer Ausdehnung des zumindest einen Anschlags 32; 33; 34 in einer Richtung, wobei die Richtung der Höhe eine größte Komponente in vertikaler Richtung V aufweist. Die Länge und Breite sind vorzugsweise orthogonal zu der Höhe angeordnet. Die Länge entspricht vorzugsweise einer längsten Ausdehnung des zumindest einen Anschlags 32; 33; 34 orthogonal zu dessen Höhe. Die Breite entspricht vorzugsweise einer kürzesten Ausdehnung des zumindest einen Anschlags 32; 33; 34 orthogonal zu dessen Höhe. Insbesondere ist vorzugsweise jeweils die Höhe der zumindest vier Anschläge 32; 33; 34 orthogonal zu der Ausrichtebene angeordnet. Vorzugsweise weisen jeweils die zumindest vier Anschläge 32; 33; 34 in ihrer Höhe jeweils eine mindestens zweimal so große Ausdehnung wie in ihrer Breite auf. Bevorzugt zusätzlich oder alternativ ist die Ausrichtebene eine horizontale Ebene. Bevorzugt zusätzlich oder alternativ sind jeweils die Grundfläche der zumindest vier Anschläge 32; 33; 34 dauerhaft in der horizontalen Ausrichtebene angeordnet.

Der zumindest eine Vorderanschlag 32 ist bevorzugt in seiner Position fixiert ausgebildet. Bevorzugt ist der zumindest eine Vorderanschlag 32 innerhalb der Ausrichtebene in seiner Position fixiert ausgebildet. Weiter bevorzugt ist der zumindest eine Vorderanschlag 32 insbesondere innerhalb der Ausrichtebene nicht linear bewegbar und/oder sich nicht linear bewegend ausgebildet. Dabei weist der zumindest eine Vorderanschlag 32 bevorzugt einen dauerhaft konstanten Abstand zu dem Rahmen 47 der Ausrichteinrichtung 31 auf. Somit wird vorzugsweise zumindest ein Antrieb, beispielsweise zumindest ein eine, bevorzugt eine von einer Vibration oder oszillierenden Bewegung verschiedene Bewegung, weiter bevorzugt lineare, Bewegung erzeugender Antrieb 44, eingespart.

Bevorzugt sind die zumindest vier Anschläge 32; 33; 34 auf dem zumindest einen Rahmen 47 der Ausrichteinrichtung 31 angeordnet. Vorzugsweise ist zumindest ein Anschlag 32; 33; 34, bevorzugt zumindest zwei Anschläge 32; 33; 34, weiter bevorzugt zumindest drei Anschläge 32; 33; 34, weiter bevorzugt alle Anschläge 32; 33; 34, der zumindest vier Anschläge 32; 33; 34 mit dem zumindest einen Rahmen 47 durch zumindest einen Schwingungsdämpfer verbunden. Somit wird bevorzugt der Übertrag von Vibrationen und/oder oszillierende Bewegungen des jeweiligen Anschlags 32; 33; 34 auf den zumindest einen Rahmen 47 reduziert und/oder minimiert, bevorzugt eliminiert.

Bevorzugt ist jeweils zumindest ein Anschlag 32; 33; 34 auf jeweils einer Seite des zumindest einen Rahmens 47 der Ausrichteinrichtung 47 angeordnet. Bevorzugt ist der zumindest eine Vorderanschlag 32 auf einer gegenüberliegenden Seite des zumindest einen Rahmens 47 zu dem zumindest einen Hinteranschlag 34 angeordnet. Bevorzugt ist zumindest einer der zumindest zwei Seitenanschläge 33 auf einer gegenüberliegenden Seite des zumindest einen Rahmens 47 zu dem zumindest einen weiteren Seitenanschlag 33 angeordnet. Vorzugsweise umschließen die zumindest vier Anschläge 32; 33; 34 einen Bereich, in welchen der zumindest eine Teilstapel abgelegt wird.

Vorzugsweise umfasst mindestens einer der zumindest vier Anschläge 32; 33; 34 mindestens eine Blaseinrichtung mit mindestens einer Fluid, bevorzugt Luft, ausstoßenden Düse 37. Bevorzugt umfassen mindestens zwei der zumindest vier Anschläge 32; 33; 34 jeweils die mindestens eine Blaseinrichtung. Insbesondere der zumindest eine Vorderanschlag 32 und/oder der zumindest eine Hinteranschlag 34 weisen bevorzugt jeweils die mindestens eine Blaseinrichtung auf. Weiter bevorzugt weisen mindestens drei, weiter bevorzugt mindestens vier, Anschläge 32; 33; 34 jeweils die mindestens eine Blaseinrichtung auf.

Bevorzugt ist die mindestens eine Blaseinrichtung zumindest ein Luftkissen unterhalb eines untersten Bogens des zumindest einen Teilstapels erzeugend ausgebildet. Vorzugsweise zusätzlich oder alternativ ist die mindestens eine Blaseinrichtung durch eingeblasenes Fluid einzelne Bogen des zumindest einen Teilstapels voneinander trennend ausgebildet. Dies unterstützt auf vorteilhafte Weise die Lockerung des zumindest einen Teilstapels während dessen Anordnung in der Ausrichteinrichtung 31. Bevorzugt zusätzlich oder alternativ ist die mindestens eine Blaseinrichtung des mindestens einen Anschlags 32; 33; 34 den zumindest einen Teilstapel zu zumindest einem weiteren der Anschläge 32; 33; 34, insbesondere zu dem zumindest einen, bevorzugt in seiner Position fixierten, Vorderanschlag 32 und/oder zumindest einem, bevorzugt zumindest zeitweise fixierten, Seitenanschlag 33, schiebend und/oder treibend ausgebildet.

Bevorzugt weist der mindestens eine die mindestens eine Blaseinrichtung aufweisende Anschlag 32; 33; 34 mindestens zwei Düsen 37, weiter bevorzugt mindestens vier Düsen 37, weiter bevorzugt genau vier Düsen 37, auf. Vorzugsweise ist die mindestens eine Düse 37, bevorzugt die mindestens zwei Düsen 37, weiter bevorzugt die mindestens vier Düsen 37, in einer Fläche, welche Fläche durch die Länge und Höhe des zumindest einen Anschlags 32; 33; 34 aufgespannt ist, angeordnet. Vorzugsweise sind die mindestens zwei Düsen 37, vorzugsweise die mindestens vier Düsen 37, dabei entlang der Länge des zumindest einen Anschlags 32; 33; 34 hintereinander angeordnet. Vorzugsweise ist die mindestens eine Düse 37, bevorzugt die mindestens zwei Düsen 37, weiter bevorzugt die mindestens vier Düsen 37, jeweils in einem unteren Drittel der Höhe des zumindest einen Anschlags 32; 33; 34 angeordnet. Dadurch ist die mindestens eine Düse 37, bevorzugt die mindestens zwei Düsen 37, weiter bevorzugt die mindestens vier Düsen 37, bevorzugt Fluid insbesondere in Richtung der untersten Bogen des zumindest einen Teilstapels ausstoßend ausgebildet. Beispielsweise zusätzlich oder alternativ ist zumindest eine erste Düse 37 der Blaseinrichtung, beispielsweise zumindest eine erste Düse 37 der mindestens zwei Düsen 37, in einem mittleren und/oder oberen Drittel der Höhe des zumindest einen Anschlags 32; 33; 34 angeordnet, wobei bevorzugt zumindest eine zweite Düse 37 der Blaseinrichtung in dem unteren Drittel der Höhe des zumindest einen Anschlags 32; 33; 34 angeordnet ist. Vorzugsweise kann somit Fluid in unterschiedlicher Höhe in den zumindest einen Teilstapel ausgestoßen werden.

Vorzugsweise ist die mindestens eine Düse 37, bevorzugt die mindestens zwei Düsen 37, Fluid, bevorzugt Luft, mit zumindest einer ersten Geschwindigkeit oder zumindest einer zweiten Geschwindigkeit ausstoßend ausgebildet. Vorzugsweise unterscheidet sich die erste Geschwindigkeit von der zweiten Geschwindigkeit. Bevorzugt ist die Geschwindigkeit, mit welcher die mindestens eine Düse 37, bevorzugt die mindestens zwei Düsen 37, das Fluid ausstößt, insbesondere in Abhängigkeit von der Anzahl an Bogen in dem zumindest einen Teilstapel und/oder von der Dicke der Bogen und/oder von der Formatgröße der Bogen anpassbar und/oder änderbar und/oder wird geändert und/oder wird angepasst.

Die mindestens eine Düse 37, bevorzugt die mindestens zwei Düsen 37, weist bevorzugt eine Austrittsrichtung des ausgestoßenen Fluides, insbesondere der Luft, mit zumindest einer Komponente auf, welche Komponente parallel zu einer Flächennormalen der Fläche aufgespannt durch die Länge und Höhe des zumindest einen Anschlags 32; 33; 34 mit der mindestens einen Blaseinrichtung gerichtet ist. Vorzugsweise ist die Austrittsrichtung der mindestens einen Düse 37, bevorzugt der mindestens zwei Düsen 37, bevorzugt mit zumindest einer Komponente der Austrittsrichtung, auf den zumindest einen gegenüberliegenden Anschlag 32; 33; 34 und/oder auf einen in der Ausrichteinrichtung 31 angeordneten Teilstapel von Substrat gerichtet. Vorzugsweise ist die Austrittsrichtung der mindestens einen Düse 37, bevorzugt die Austrittsrichtungen der zumindest zwei Düsen 37, weiter bevorzugt die Austrittsrichtungen aller Düsen 37, des zumindest einen Anschlags 32; 33; 34 zumindest zeitweise, bevorzugt dauerhaft auf den mindestens einen in der Ausrichteinrichtung 31 angeordneten Teilstapel gerichtet.

Die Austrittsrichtung des ausgestoßenen Fluides, insbesondere der Luft, weist bevorzugt zusätzlich oder alternativ zu der Flächennormalen der Fläche aufgespannt durch die Länge und Höhe des zumindest einen Anschlags 32; 33; 34 in einer Ebene parallel zu der Ausrichtebene einen Winkel von mindestens 0° (null Grad) und/oder einen Winkel von maximal + 80° (plus achtzig Grad), bevorzugt von maximal + 60° (plus sechzig Grad), weiter bevorzugt von maximal + 45° (plus fünfundvierzig Grad), und/oder einen Winkel von maximal - 80° (minus achtzig Grad), bevorzugt von maximal - 60° (minus sechzig Grad), weiter bevorzugt von maximal - 45° (minus fünfundvierzig Grad), auf. Bevorzugt zusätzlich oder alternativ ist die Austrittsrichtung des ausgestoßenen Fluides, insbesondere der Luft, zu der Flächennormalen der Fläche aufgespannt durch die Länge und Höhe des zumindest einen Anschlags 32; 33; 34 in einer Ebene parallel zu der Ausrichtebene zwischen einem Winkel von maximal + 80° (plus achtzig Grad), bevorzugt von maximal + 60° (plus sechzig Grad), weiter bevorzugt von maximal + 45° (plus fünfundvierzig Grad), und einem Winkel von maximal - 80° (minus achtzig Grad), bevorzugt von maximal - 60° (minus sechzig Grad), weiter bevorzugt von maximal - 45° (minus fünfundvierzig Grad), einstellbar und/oder eingestellt ausgebildet und/oder wird eingestellt. Vorzugsweise weist die mindestens eine Düse 37, bevorzugt die mindestens zwei Düsen 37, eine Schwenkachse auf, welche auf der Ausrichtebene senkrecht steht und/oder senkrecht zu der Austrittsrichtung angeordnet ist. Vorzugsweise ist die Austrittsrichtung des Fluides in oder entgegen einer Schwenkrichtung um die Schwenkachse der mindestens einen Düse 37, bevorzugt der mindestens zwei Düsen 37, zu der Flächennormalen der Fläche aufgespannt durch die Länge und Höhe des zumindest einen Anschlags 32; 33; 34 um einen Winkel von maximal 80° (achtzig Grad), bevorzugt von maximal 60° (sechzig Grad), weiter bevorzugt von maximal 45° (fünfundvierzig Grad), schwenkbar ausgebildet. Somit weist die Düse 37, bevorzugt die mindestens zwei Düsen 37, mindestens zwei Positionen mit jeweils einer Austrittsrichtung auf, welche Austrittsrichtungen sich zueinander um einen Winkel von maximal 160° (hundertsechzig Grad), bevorzugt von maximal 120° (hundertzwanzig Grad), weiter bevorzugt von maximal 90° (neunzig Grad), unterscheiden.

Vorzugsweise wird die Geschwindigkeit des Fluides der mindestens einen Düse 37, bevorzugt der mindestens zwei Düsen 37, und/oder die Austrittsrichtung des ausgestoßenen Fluides in Abhängigkeit von der Anzahl an Bogen in dem zumindest einen Teilstapel und/oder von der Dicke der Bogen und/oder von der Formatgröße der Bogen verändert und/oder angepasst. Beispielsweise wird die Geschwindigkeit des ausgestoßenen Fluides für einen Teilstapel aus dickeren Bogen, also mit einem höheren Flächengewicht, im Vergleich zu einem Teilstapel aus dünneren Bogen, also mit einem geringeren Flächengewicht, erhöht. Beispielsweise wird die Austrittsrichtung einer an dem jeweiligen Anschlag 32; 33; 34 äußeren Düse 37 um einen Winkel von ungleich 0° (null Grad) geschwenkt, während die Austrittsrichtung einer an dem jeweiligen Anschlag 32; 33; 34 mittleren Düse 37 parallel zu der Flächennormalen der Fläche aufgespannt durch die Länge und Höhe des zumindest einen Anschlags 32; 33; 34 gerichtet ist, sodass vorzugsweise die zumindest zwei Düsen 37, bevorzugt alle Düsen 37, des jeweiligen Anschlags 32; 33; 34 auf einen zu verarbeitenden Teilstapel gerichtet sind. Dies ist beispielsweise dann erforderlich, wenn ein Bogenformat vorliegt, bei welchem die äußere Düse 37 bei einer ungeschwenkten Anordnung, also parallel zu der Flächennormalen der Fläche aufgespannt durch die Länge und Höhe des zumindest einen Anschlags 32; 33; 34, beispielsweise aufgrund der Formatgröße nicht auf den Teilstapel gerichtet ist.

Vorzugsweise weist mindestens einer der zumindest vier Anschläge 32; 33; 34 mindestens ein Auslasssystem 38 mit mindestens einer Auslassöffnung auf. Bevorzugt umfassen mindestens zwei der zumindest vier Anschläge 32; 33; 34 jeweils das mindestens eine Auslasssystem 38. Insbesondere der zumindest eine Vorderanschlag 32 und/oder der zumindest eine Hinteranschlag 34 weisen bevorzugt jeweils das mindestens eine Auslasssystem 38 auf. Weiter bevorzugt weisen mindestens drei, weiter bevorzugt mindestens vier, Anschläge 32; 33; 34 jeweils das mindestens eine Auslasssystem 38 auf.

Vorzugsweise ist die zumindest eine Auslassöffnung parallel zu der Flächennormalen der Fläche aufgespannt durch die Länge und Höhe des zumindest einen Anschlags 32; 33; 34 angeordnet. Weiter bevorzugt durchdringt die zumindest eine Auslassöffnung den zumindest einen Anschlag 32; 33; 34 zumindest teilweise, bevorzugt vollständig, parallel zu der Flächennormalen der Fläche aufgespannt durch dessen Länge und Höhe.

Bevorzugt ist Fluid, bevorzugt Luft, insbesondere das durch die mindestens eine Blaseinrichtung eingebrachte Fluid, aus einem Bereich zwischen den zumindest vier Anschlägen 32; 33; 34 durch die mindestens eine Auslassöffnung entweichend ausgebildet und/oder entweicht. Beispielsweise alternativ oder zusätzlich wird Fluid aktiv durch die mindestens eine Auslassöffnung aus dem Bereich zwischen den zumindest vier Anschlägen 32; 33; 34 abgesaugt, beispielsweise durch die Erzeugung eines Unterdrucks. Bevorzugt verhindert dies ein Flattern und/oder Anheben und/oder Wölben der Bogen und/oder der Bogenkanten des zumindest einen Teilstapels während dessen Ausrichtung in der Ausrichteinrichtung 31.

Bevorzugt weist mindestens einer der zumindest vier Anschläge 32; 33; 34 mindestens zwei Auslasssysteme 38, weiter bevorzugt mindestens vier Auslasssysteme 38, weiter bevorzugt genau vier Auslasssysteme 38, mit jeweils mindestens einer Auslassöffnung auf. Vorzugsweise sind die mindestens zwei Auslasssysteme 38 dabei entlang der Länge des zumindest einen Anschlags 32; 33; 34 hintereinander angeordnet. Vorzugsweise ist das mindestens eine Auslasssystem 38, bevorzugt die mindestens zwei Auslasssysteme 38, jeweils in einer oberen Hälfte der Höhe des zumindest einen Anschlags 32; 33; 34 angeordnet. Vorzugsweise ist dadurch aufgestautes Fluid insbesondere zwischen oberen Bogen des zumindest einen Teilstapels durch die mindestens eine Auslassöffnung entweichend ausgebildet.

Das mindestens eine Auslasssystem 38 umfasst bevorzugt die zumindest eine Auslassöffnung, weiter bevorzugt zumindest zwei Auslassöffnungen, weiter bevorzugt zumindest drei Auslassöffnungen, weiter bevorzugt mindestens sechs Auslassöffnungen. Vorzugsweise sind die mindestens zwei Auslassöffnungen in einer vertikalen Richtung V, welche bevorzugt auf der Ausrichtebene senkrecht steht, übereinander und beispielsweise zusätzlich oder alternativ zueinander versetzt angeordnet. Bevorzugt sind die mindestens drei Auslassöffnungen, bevorzugt die mindestens sechs Auslassöffnungen, zueinander v-förmig angeordnet. Bevorzugt zeigt die Spitze der v-förmigen Anordnung der mindestens drei Auslassöffnungen dabei in Richtung der Ausrichtebene, vorzugsweise nach unten, das heißt entgegen der vertikalen Richtung V. Diese Anordnung der mindestens zwei Auslassöffnungen, bevorzugt der mindestens drei Auslassöffnungen, ermöglicht bevorzugt ein optimales Entweichen des Fluides durch die jeweiligen Auslassöffnungen.

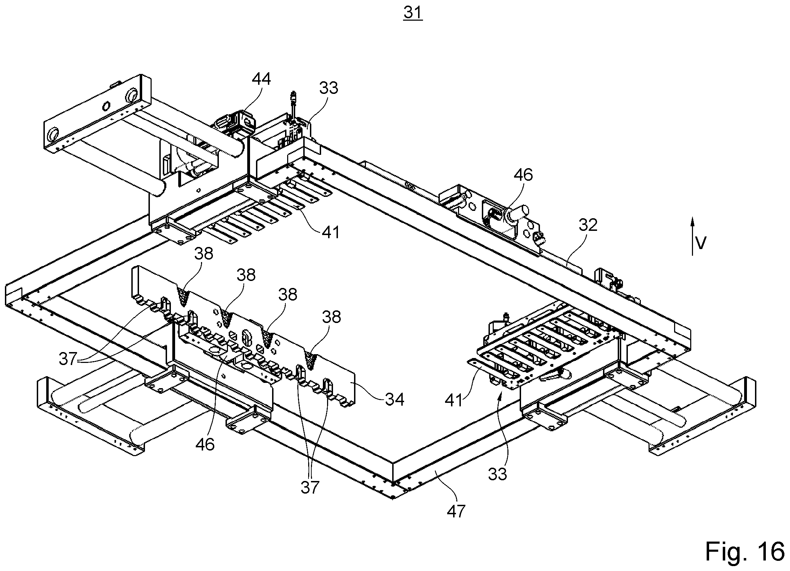

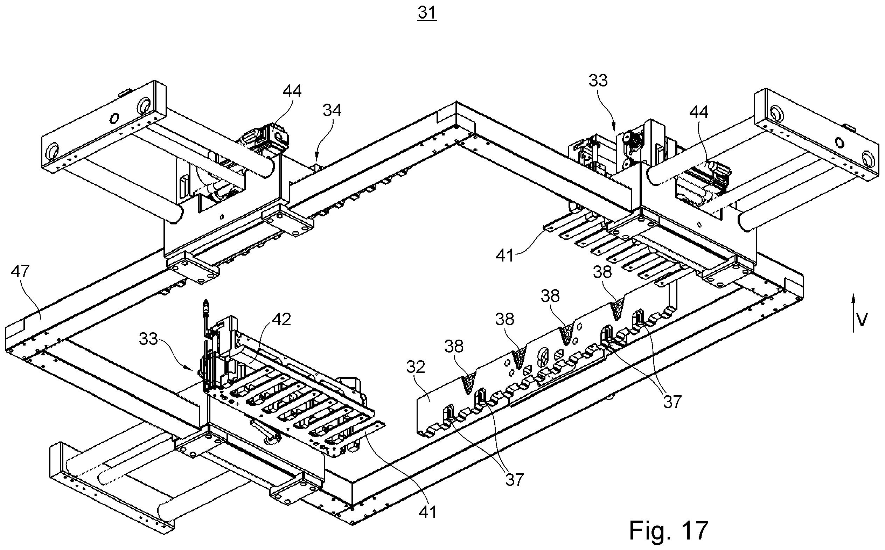

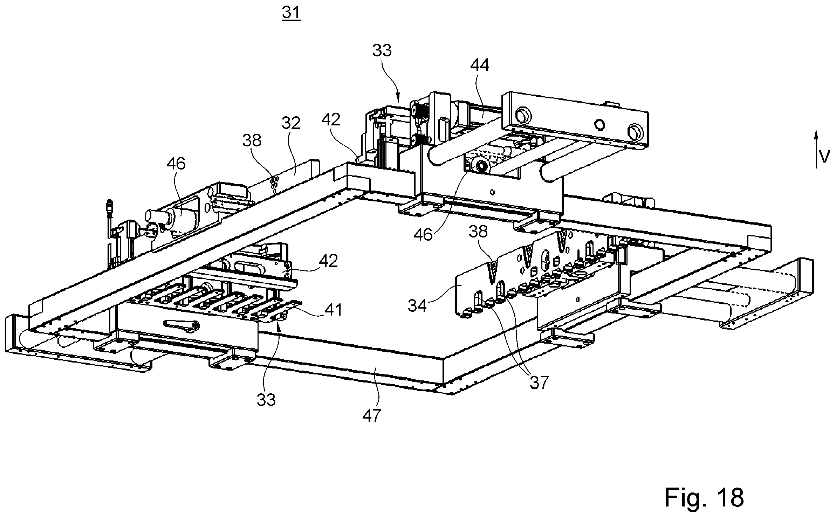

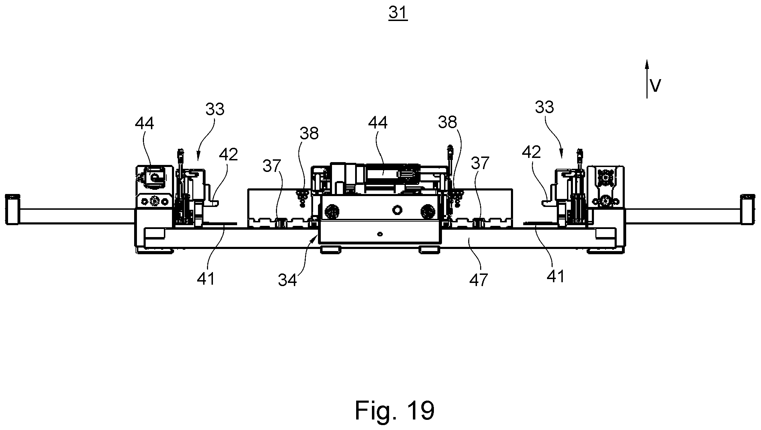

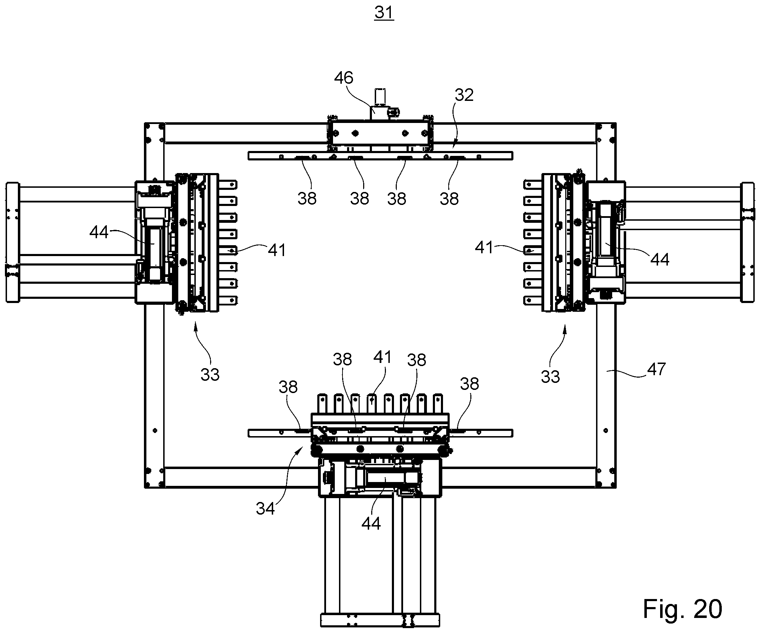

Die Ausrichteinrichtung 31 weist zumindest ein Stützelement 41 auf. An den zumindest zwei Seitenanschlägen 33 und an dem zumindest einen Hinteranschlag 34 ist jeweils zumindest ein Stützelement 41 angeordnet. Zumindest an den zumindest zwei Seitenanschlägen 33 ist jeweils zumindest ein Stützelement 41 angeordnet. Zusätzlich ist an dem zumindest einen Hinteranschlag 34 jeweils zumindest ein Stützelement 41 angeordnet. Es weisen zumindest die zumindest zwei Seitenanschläge 33 jeweils zumindest ein Stützelement 41 auf. Es weist der zumindest eine Hinteranschlag 34 jeweils zumindest ein Stützelement 41 auf. Bevorzugt weist der zumindest eine Vorderanschlag 32 kein Stützelement 41 auf. Beispielhaft ist in Fig. 16, Fig. 17, Fig. 18 und Fig. 19 eine bevorzugte Ausrichteinrichtung 31 gezeigt, wobei jeweils die zwei Seitenanschläge 33 zumindest ein Stützelement 41 aufweisen. In Fig. 20 ist beispielhaft eine alternative, bevorzugte, Ausrichteinrichtung 31 gezeigt, wobei die zwei Seitenanschläge 33 sowie der Hinteranschlag 34 jeweils zumindest ein Stützelement 41 aufweist.

Die im Vorangegangenen und im Folgenden dargelegten Merkmale und Merkmalskombinationen sind dabei vorzugsweise auf alle Ausführungsformen der Ausrichteinrichtung 31 anzuwenden, solange dadurch kein Widerspruch entsteht.

Bevorzugt ist das zumindest eine Stützelement 41 jeweils gabelförmig ausgebildet. Vorzugsweise weist das zumindest eine Stützelement 41 zumindest zwei Arme, weiter bevorzugt mindestens vier Arme, weiter bevorzugt eine Vielzahl von Armen, auf, welche jeweils in Richtung des zu dem das Stützelement 41 aufweisenden Anschlag 33; 34 gegenüberliegenden Anschlags 32; 33 gerichtet angeordnet sind. Beispielsweise alternativ ist das zumindest eine Stützelement 41 plattenförmig, beispielsweise als Lochplatte, ausgebildet. Vorzugsweise sind freie Bereiche, beispielsweise jene Bereiche zwischen den Armen des zumindest einen Stützelements 41 und/oder jene Bereiche der Löcher in der Lochplatte, Fluid und/oder Luft aus einem Bereich zwischen den zumindest vier Anschlägen 32; 33; 34, bevorzugt entgegen der vertikalen Richtung V, abführend ausgebildet.

Das zumindest eine Stützelement 41 ist bevorzugt in der Ausrichtebene angeordnet. Bevorzugt zusätzlich oder alternativ ist das zumindest eine Stützelement 41 in einer Ebene angeordnet, wobei die Ebene parallel zu der Ausrichtebene angeordnet ist. Zusätzlich oder alternativ ist das zumindest eine Stützelement 41 in Richtung des zu dem das Stützelement 41 aufweisenden Anschlag 33; 34 gegenüberliegenden Anschlags 32; 33 gerichtet angeordnet und/oder angeordnet wird. Zusätzlich oder alternativ ist das zumindest eine Stützelement 41 bevorzugt mit einer längsten Kante in Richtung des zu dem das Stützelement 41 aufweisenden Anschlag 33; 34 gegenüberliegenden Anschlags 32; 33 gerichtet angeordnet. Bevorzugt zusätzlich oder alternativ ist das zumindest eine Stützelement 41 von dem das jeweilige Stützelement 41 aufweisenden Seitenanschlag 33 und/oder von dem das jeweilige Stützelement 41 aufweisenden Hinteranschlag 34 in Richtung des zu dem das Stützelement 41 aufweisenden Anschlag 33; 34 gegenüberliegenden Anschlags 32; 33 von dem das jeweilige Stützelement 41 aufweisenden Seitenanschlag 33 und/oder von dem das jeweilige Stützelement 41 aufweisenden Hinteranschlag 34 herausragend angeordnet. Bevorzugt zusätzlich oder alternativ ist das zumindest eine Stützelement 41 von dem das jeweilige Stützelement 41 aufweisenden Seitenanschlag 33 in Richtung des zu dem das Stützelement 41 aufweisenden Anschlag 33 gegenüberliegenden Anschlags 33, vorzugsweise Seitenanschlag 33, von dem das jeweilige Stützelement 41 aufweisenden Seitenanschlag 33 herausragend angeordnet und/oder ragt heraus. Bevorzugt zusätzlich oder alternativ ist das zumindest eine Stützelement 41 von dem das jeweilige Stützelement 41 aufweisenden Hinteranschlag 34 in Richtung des zu dem das Stützelement 41 aufweisenden Anschlag 34 gegenüberliegenden Anschlags 32, vorzugsweise Vorderanschlag 32, von dem das jeweilige Stützelement 41 aufweisenden Hinteranschlag 34 herausragend angeordnet und/oder ragt heraus. Zumindest ein Seitenanschlag 33 der zumindest zwei Seitenanschläge 33, bevorzugt die zumindest zwei Seitenanschläge 33, und/oder der zumindest eine Hinteranschlag 34 weisen bevorzugt jeweils die Länge und die Höhe auf. Die Länge und Höhe spannen bevorzugt eine Ebene auf. Vorzugsweise ist das zumindest eine Stützelement 41 in einer Stützfläche angeordnet. Die Stützfläche steht bevorzugt senkrecht auf der Ebene des Seitenanschlags 33 und/oder des Hinteranschlags 34, wobei die Ebene bevorzugt durch die Länge und Höhe aufgespannt ist. Eine Länge und eine Breite des zumindest einen Stützelements 41 spannen bevorzugt die Stützfläche auf. Das zumindest eine Stützelement 41 ist bevorzugt in der Stützfläche angeordnet. Das zumindest eine Stützelement 41 weist vorzugsweise entlang einer Kante eine Ausdehnung auf. Vorzugsweise ist eine Kante des zumindest einen Stützelements 41 mit kürzester Ausdehnung dessen Höhe. Vorzugsweise ist eine Kante des zumindest einen Stützelements 41 mit längster Ausdehnung dessen Länge. Vorzugsweise ist eine Kante des zumindest einen Stützelements 41 mit mittlerer Ausdehnung dessen Breite.

Bevorzugt weist das zumindest eine Stützelement 41 jeweils zumindest zwei Positionen auf. Bevorzugt ist das zumindest eine Stützelement 41 beweglich, insbesondere bewegbar zwischen den zumindest zwei Positionen. Das zumindest eine Stützelement 41 weist bevorzugt von dessen Spitze, insbesondere der Spitze des zumindest einen Arms des Stützelements 41, zu dem das jeweilige zumindest eine Stützelement 41 aufweisenden Seitenanschlag 33 oder zu dem das jeweilige zumindest eine Stützelement 41 aufweisenden Hinteranschlag 34 in einer ersten, insbesondere ausgefahrenen, Position einen ersten Abstand und in einer zweiten, insbesondere eingefahrenen, Position einen zweiten Abstand auf. Vorzugsweise weist dabei die Spitze des jeweiligen Stützelements 41 den größten Abstand zu dem das zumindest eine Stützelement 41 aufweisenden Seitenanschlag 33 oder zu dem das jeweilige zumindest eine Stützelement 41 aufweisenden Hinteranschlag 34 auf. Die Spitze des zumindest einen Stützelements 41 entspricht bevorzugt demjenigen Punkt des zumindest einen Stützelements 41, welcher in der ersten ausgefahrenen Position des Stützelements 41 zu dem das zumindest eine Stützelement 41 aufweisenden Anschlag 33; 34 den größten Abstand aufweist. Der erste Abstand in der ersten, insbesondere ausgefahrenen, Position ist bevorzugt größer als der zweite Abstand in der zweiten, insbesondere eingefahrenen, Position. Vorzugsweise ist das zumindest eine Stützelement 41 in der ersten Position weiter in den Bereich zwischen den zumindest vier Anschlägen 32; 33; 34 hineinragend ausgebildet als in dessen zweiter Position.

Bevorzugt zusätzlich oder alternativ ist das zumindest eine Stützelement 41 vorzugsweise von der ersten Position in die zweite Position und/oder umgekehrt überführbar und/oder bewegbar und/oder wird bewegt. Bevorzugt wird das zumindest eine Stützelement 41 bei einer Überführung von der ersten Position in die zweite Position aus dem Bereich zwischen den mindestens vier Anschlägen 32; 33; 34 bevorzugt in einen Raumbereich unterhalb des das jeweilige Stützelement 41 aufweisenden Anschlags 33; 34 oder in einen Raumbereich außerhalb des Bereichs zwischen den mindestens vier Anschlägen 32; 33; 34 zurückgezogen. Bevorzugt ist die Spitze des zumindest einen Stützelements 41 in der zweiten, vorzugsweise eingefahrenen, Position außerhalb des Bereichs zwischen den zumindest vier Anschlägen 32; 33; 34 angeordnet, beispielsweise unterhalb des zumindest einen das Stützelement 41 aufweisenden Anschlags 33; 34. Weiter wird das zumindest eine Stützelement 41 bevorzugt bei einer Überführung von der zweiten Position in die erste Position in den Bereich zwischen den mindestens vier Anschlägen 32; 33; 34 bevorzugt ausgehend von einem Raumbereich unterhalb des das jeweilige Stützelement 41 aufweisenden Anschlags 33; 34 oder ausgehend von einem Raumbereich außerhalb des Bereichs zwischen den mindestens vier Anschlägen 32; 33; 34 hineinbewegt. Bevorzugt ist die Spitze des zumindest einen Stützelements 41 in der ersten, vorzugsweise ausgefahrenen, Position innerhalb des Bereichs zwischen den zumindest vier Anschlägen 32; 33; 34 angeordnet. Bevorzugt zusätzlich oder alternativ weisen die mindestens zwei Seitenanschläge 33 und/oder der mindestens eine Hinteranschlag 34 jeweils zumindest einen die Bewegung des zumindest einen Stützelements 41 erzeugenden Antrieb auf. Bevorzugt wird das zumindest Stützelement 41 des zumindest einen Seitenanschlags 33 der zumindest zwei Seitenanschläge 33 durch zumindest einen Antrieb des zumindest einen Seitenanschlags 33 von der ersten Position in die zweite Position oder umgekehrt bewegt. Bevorzugt zusätzlich oder alternativ wird das das zumindest eine Stützelement 41 des zumindest einen Hinteranschlags 34 durch zumindest einen Antrieb des zumindest einen Hinteranschlags 34 von der ersten Position in die zweite Position oder umgekehrt bewegt.

Der zumindest eine Teilstapel wird bei dessen Ablegen in der zumindest einen Ausrichteinrichtung 31 auf dem zumindest einen Stützelement 41, vorzugsweise auf zumindest zwei Stützelementen 41, weiter bevorzugt auf mindestens drei Stützelementen 41, abgelegt. Das zumindest eine Stützelement 41 ist als Auflageelement zur Auflage des zumindest einen Teilstapels von Bogen in der Ausrichteinrichtung 31 ausgebildet. Insbesondere ist das zumindest eine Stützelement 41, bevorzugt die zumindest zwei Stützelemente 41, weiter bevorzugt die mindestens drei Stützelemente 41, ein Hindurchfallen des zumindest einen Teilstapels durch den Bereich zwischen den zumindest vier Anschlägen 32; 33; 34 verhindernd ausgebildet. Durch eine Überführung des zumindest einen Stützelements 41 von der ersten Position in die zweite Position ist der zumindest eine Teilstapel auf die unterhalb des zumindest einen Stützelements 41, bevorzugt unterhalb der Ausrichtebene, weiter bevorzugt unterhalb der Ausrichteinrichtung 31, angeordnete Palette 16 und/oder Gabelsystem und/oder Platte und/oder zumindest zeitweise einen Boden erzeugende Objekt ablegbar und/oder förderbar und/oder abgelegt ausgebildet und/oder gefördert ausgebildet.

An den mindestens zwei Seitenanschlägen 33 und/oder dem zumindest einen Hinteranschlag 34 ist bevorzugt jeweils zumindest ein Niederhalter 42 angeordnet. In der bevorzugten Ausführung, beispielsweise dargestellt in Fig. 16 bis Fig. 19, weisen zumindest jeweils die Seitenanschläge 33 zumindest einen Niederhalter 42 auf. In der beispielsweise alternativen Ausführungsform in Fig. 20 weisen jeweils die Seitenanschläge 33 und der Hinteranschlag 34 zumindest einen Niederhalter 42 auf.

Der zumindest eine Niederhalter 42 ist vorzugsweise über, bevorzugt in vertikaler Richtung V darüber, dem zumindest einen Stützelement 41 und/oder über der Ausrichtebene angeordnet. Vorzugsweise ist der Abstand zwischen dem zumindest einen Niederhalter 42 und dem zumindest einen Stützelement 41 einstellbar und/oder eingestellt und/oder wird eingestellt. Vorzugsweise wird der Abstand zwischen dem zumindest einen Niederhalter 42 und dem zumindest einen Stützelement 41 so eingestellt, dass der zumindest eine Niederhalter 42 den obersten Bogen des Teilstapels insbesondere von oben zumindest zeitweise berührt, jedoch nicht auf einen darunterliegenden Bogen presst.

Bevorzugt zusätzlich oder alternativ weist der zumindest eine Niederhalter 42 zumindest zeitweise eine oszillierende Bewegung in oder entgegen der Richtung des zumindest einen Stützelements 41 und/oder in oder entgegen der vertikalen Richtung V und/oder in oder entgegen einer Richtung orthogonal zu der Flächennormalen der Fläche aufgespannt durch eine Länge und Höhe des zumindest einen den Niederhalter 42 aufweisenden Anschlags 33; 34, insbesondere parallel zu der Höhe des Anschlags 33; 34, auf. Bevorzugt wird der zumindest eine Niederhalter 42 zumindest zeitweise oszillierend in oder entgegen der Richtung des zumindest einen Stützelements 41 und/oder in oder entgegen der vertikalen Richtung V und/oder in oder entgegen einer Richtung orthogonal zu der Flächennormalen der Fläche aufgespannt durch die Länge und Höhe des zumindest einen den Niederhalter 42 aufweisenden Anschlags 33; 34, insbesondere parallel zu der Höhe des Anschlags 33; 34, bewegt. Vorzugsweise steht zumindest ein die oszillierende Bewegung des zumindest einen Niederhalters 42 erzeugender Antrieb mit dem zumindest einen Niederhalter 42 in Wirkverbindung. Vorzugsweise weisen die mindestens zwei Seitenanschläge 33 und/oder der zumindest eine Hinteranschlag 34 jeweils einen die oszillierende Bewegung des zumindest einen Niederhalters 42 erzeugenden Antrieb auf. Bevorzugt wird die oszillierende Bewegung des zumindest einen Niederhalters 42 durch jeweils zumindest einen Antrieb der mindestens zwei Seitenanschläge 33 und/oder des zumindest einen Hinteranschlags 34 erzeugt.

Bevorzugt ist der zumindest eine Niederhalter 42 balkenförmig ausgebildet. Vorzugsweise erzeugt der zumindest eine Niederhalter 42 zumindest eine Fläche, welche bevorzugt zumindest zeitweise bevorzugt von oben, also entgegen der vertikalen Richtung V, auf dem zumindest einen Teilstapel in der Ausrichteinrichtung 31 aufliegt und/oder eine Bewegung des zumindest einen Teilstapels in vertikaler Richtung V und/oder nach oben hin begrenzt. Bevorzugt begrenzt der zumindest eine Niederhalter 42 eine Bewegung des zumindest einen Teilstapels in vertikaler Richtung V und/oder nach oben hin. Bevorzugt ist der zumindest eine Niederhalter 42 ein Flattern zumindest einer Kante eines Bogens des zumindest einen Teilstapels und/oder Abheben zumindest einer Kante eines Bogens des zumindest einen Teilstapels von zumindest einem darunterliegenden Bogen minimierend und/oder verhindernd ausgebildet. Ein Flattern beschreibt vorzugsweise eine Bewegung der zumindest einen Kante des Bogens insbesondere in oder entgegen einer Richtung, welche parallel zu der Flächennormalen der Ausrichtebene gerichtet ist, also bevorzugt nach oben oder unten. Bevorzugt zusätzlich oder alternativ ist der zumindest eine Niederhalter 42 ein Wölben der Kante des mindestens einen Bogens des zumindest einen Teilstapels minimierend und/oder verhindernd ausgebildet. Bevorzugt ist die zumindest zeitweise oszillierende Bewegung des zumindest einen Niederhalters 42 diese Minimierung und/oder Verhinderung verbessernd ausgebildet.

Bevorzugt weist die Ausrichteinrichtung 31 zumindest eine Sperreinrichtung, vorzugsweise genau eine Sperreinrichtung, auf. Vorzugsweise ist die zumindest eine Sperreinrichtung zusätzlich als Wendeeinrichtung zum Wenden von Bogen und/oder des zumindest einen Teilstapels ausgebildet. Die zumindest eine Sperreinrichtung ist vorzugsweise stangenförmig ausgebildet. Vorzugsweise weist die zumindest eine Sperreinrichtung zumindest zwei Stangen oder Stäbe auf, welche zueinander parallel und beabstandet angeordnet sind. Bevorzugt ist die zumindest eine Sperreinrichtung an dem zumindest einen Rahmen 47 der Ausrichteinrichtung 31 außerhalb des Bereichs zwischen den zumindest vier Anschlägen 32; 33; 34 angeordnet. Vorzugsweise ist die zumindest eine Sperreinrichtung auf der Seite des Rahmens 47, an welcher der zumindest eine Vorderanschlag 32 angeordnet ist, an dem zumindest einen Rahmen 47 der Ausrichteinrichtung 31 außerhalb des Bereichs zwischen den zumindest vier Anschlägen 32; 33; 34 angeordnet.

Bevorzugt zusätzlich oder alternativ ist die zumindest eine Sperreinrichtung schwenkbar und/oder geschwenkt ausgebildet. Vorzugsweise ist die zumindest eine Sperreinrichtung, bevorzugt infolge des Schwenkens, zumindest zeitweise oberhalb der Ausrichtebene angeordnet. Vorzugsweise ist die zumindest eine Sperreinrichtung bevorzugt von oben in den Bereich zwischen den zumindest vier Anschlägen 32; 33; 34 schwenkend ausgebildet. Dadurch wird bevorzugt ein während der Ausrichtung dauerhaftes Niederhalten der Bogen des zumindest einen Teilstapels in der Ausrichteinrichtung 31 gewährleistet. Bevorzugt zusätzlich oder alternativ steht die zumindest eine Sperreinrichtung mit zumindest einem die Schwenkbewegung erzeugenden Antrieb in Wirkverbindung. Eine Wirkverbindung beschreibt im Vorangegangenen und im Folgenden bevorzugt, dass ein erstes Element zumindest indirekt oder direkt mit einem zweiten Element verbunden ist und/oder mit dem zweiten Element zusammen agierend ausgebildet ist.

Bevorzugt zusätzlich oder alternativ ist die zumindest eine Sperreinrichtung den zumindest einen Teilstapel wendend ausgebildet. Der zumindest eine Teilstapel wird bevorzugt durch die zumindest eine Sperreinrichtung gewendet. Vorzugsweise werden die Bogen mit einer Kante zwischen die zumindest zwei Stangen oder Stäbe geführt, vorzugsweise anschließend rotiert zumindest eine der Stangen oder Stäbe zum Wenden. Bevorzugt wird der zumindest eine Teilstapel vor dessen Positionierung in der Ausrichteinrichtung 31 gewendet. Diese den Teilstapel wendende Bewegung vermeidet vorteilhaft geknickte Bogenkanten und Eselsohren.

Bevorzugt weist jeder der zumindest vier Anschläge 32; 33; 34 mindestens einen Antrieb 44; 46 auf. Vorzugsweise weist der zumindest eine Vorderanschlag 32 insbesondere einen Antrieb 46 auf. Bevorzugt weist der zumindest eine Vorderanschlag 32 keinen eine von der Vibration oder oszillierenden Bewegung verschiedene Bewegung erzeugenden Antrieb 44, vorzugsweise keinen Linearantrieb 44, auf. Bevorzugt zusätzlich oder alternativ weisen die mindestens zwei Seitenanschläge 33 und/oder der zumindest eine Hinteranschlag 34 jeweils mindestens zwei Antriebe 44; 46 auf.

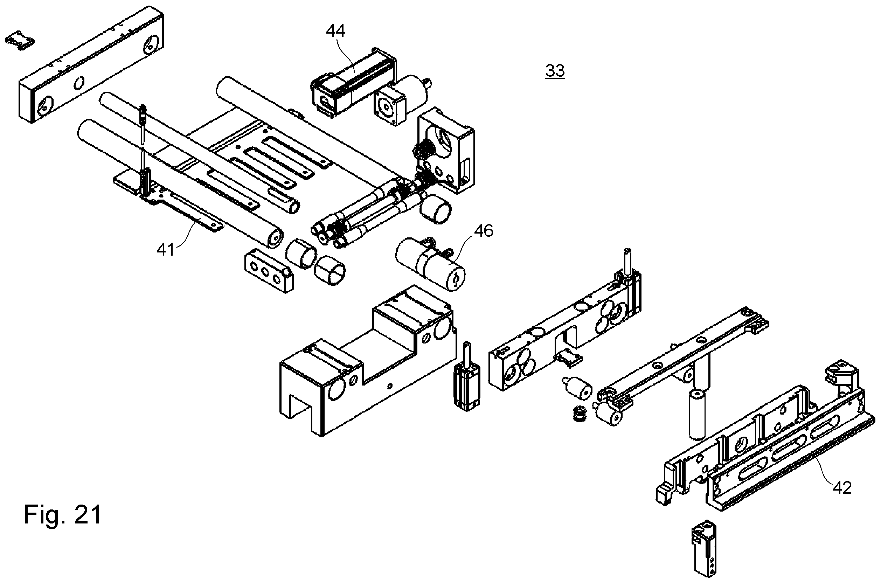

In Fig. 16 bis Fig. 21 ist die Ausrichteinrichtung 31 bzw. Bestandteile der Ausrichteinrichtung 31 gezeigt. Dabei weisen vorzugsweise alle vier Anschläge 32; 33; 34 jeweils einen als Vibrationsantrieb 46 ausgebildeten Antrieb 46 und die zwei Seitenanschläge 33 sowie der Hinteranschlag 34 jeweils einen als Linearantrieb 44 ausgebildeten Antrieb 44 auf. Aus zeichnerischen Gründen sind die Antriebe 44; 46 in den Figuren nicht jeweils für jeden Anschlag 32; 33; 34 mit Bezugszeichen versehen, da sie beispielsweise durch weitere Bestandteile verdeckt sind.

Bevorzugt weist zumindest einer der zumindest vier Anschläge 32; 33; 34 zumindest einen eine Vibration und/oder oszillierende Bewegung erzeugenden Antrieb 46 auf.

Bevorzugt weisen zumindest zwei Anschläge 32; 33; 34, weiter bevorzugt mindestens drei Anschläge 32; 33; 34, weiter bevorzugt die mindestens vier Anschläge 32; 33; 34, jeweils den zumindest einen eine Vibration oder oszillierende Bewegung erzeugenden Antrieb 46 auf. Vorzugsweise weisen die mindestens zwei Seitenanschläge 33 und/oder der zumindest eine Hinteranschlag 34 und/oder der zumindest eine Vorderanschlag 32 jeweils den eine Vibration und/oder oszillierende Bewegung erzeugenden Antrieb 46 auf. Bevorzugt weisen jeder der mindestens zwei Seitenanschläge 33 und der zumindest eine Hinteranschlag 34 jeweils zumindest einen eigenen die Vibration oder oszillierende Bewegung erzeugenden Antrieb 46 auf. Vorzugsweise weist der zumindest eine Vorderanschlag 32 jeweils einen eigenen die Vibration oder oszillierende Bewegung erzeugenden Antrieb 46 auf. Vorzugsweise weisen die zumindest zwei Seitenanschläge 33 und/oder der zumindest eine Hinteranschlag 34 jeweils zumindest ein Stützelement 41 auf. Bevorzugt ist somit der zumindest eine Vibration oder oszillierende Bewegung erzeugende Antrieb 46 das zumindest eine Stützelement 41 in Vibration oder eine oszillierende Bewegung versetzend ausgebildet, bevorzugt zusammen mit dem das zumindest eine Stützelement 41 aufweisenden Anschlag 33; 34. Bevorzugt ist der zumindest eine Vibration und/oder oszillierende Bewegung erzeugende Antrieb 46 als Vibrationsantrieb 46 ausgebildet. Bevorzugt ist der die Vibration oder oszillierende Bewegung erzeugende Antrieb 46 pneumatisch betrieben und/oder als pneumatischer Antrieb 46 ausgebildet und/oder als zumindest ein Kolbenvibrator ausgebildet. Bevorzugt ist die Frequenz der Vibration oder oszillierenden Bewegung in Abhängigkeit von der Formatgröße der Bogen und/oder von dem Flächengewicht der Bogen und/oder des Materials des Substrats eingestellt und/oder einstellbar und/oder wird eingestellt.

Beispielsweise ist der zumindest eine Vibrationsantrieb 46 zusätzlich die oszillierende Bewegung des zumindest einen Niederhalters 42 erzeugend ausgebildet. Alternativ weist beispielsweise der zumindest eine Niederhalter 42 einen von dem zumindest einen Vibrationsantrieb 46 verschiedenen Antrieb auf.

Bevorzugt zusätzlich oder alternativ weisen die mindestens zwei Seitenanschläge 33 und/oder der zumindest eine Hinteranschlag 34 jeweils zumindest einen mindestens eine Bewegung, bevorzugt eine von der Vibration oder oszillierenden Bewegung verschiedene Bewegung, erzeugenden Antrieb 44 auf. Weiter bevorzugt zusätzlich oder alternativ weisen die mindestens zwei Seitenanschläge 33 und/oder der zumindest eine Hinteranschlag 34 jeweils zumindest einen mindestens eine lineare Bewegung erzeugenden Antrieb 44 auf. Bevorzugt weisen die mindestens zwei Seitenanschläge 33 und der zumindest eine Hinteranschlag 34 jeweils zumindest einen eigenen die mindestens eine von der Vibration oder oszillierenden Bewegung verschiedene Bewegung erzeugenden Antrieb 44, bevorzugt die lineare Bewegung erzeugenden Antrieb 44, auf. Vorzugsweise ist der zumindest eine die, bevorzugt die von der Vibration oder oszillierenden Bewegung verschiedene Bewegung, weiter bevorzugt lineare, Bewegung erzeugende Antrieb 44 als Linearantrieb 44 ausgebildet. Der die, bevorzugt die von der Vibration oder oszillierenden Bewegung verschiedene Bewegung, weiter bevorzugt lineare, Bewegung erzeugende Antrieb 44 ist bevorzugt als Servomotor und/oder als Elektromotor, beispielsweise lagegeregelter Elektromotor, ausgebildet. Der zumindest eine mindestens eine von der Vibration oder oszillierenden Bewegung verschiedene Bewegung erzeugende Antrieb 44, bevorzugt der der zumindest eine lineare Bewegung erzeugende Antrieb 44, ist bevorzugt unabhängig von dem zumindest eine Vibration oder oszillierende Bewegung erzeugenden Antrieb 46 ausgebildet. Bevorzugt bewegt der zumindest eine mindestens eine von der Vibration oder oszillierenden Bewegung verschiedene Bewegung erzeugende Antrieb 44, bevorzugt der der zumindest eine lineare Bewegung erzeugende Antrieb 44, den zumindest einen Anschlag 33; 34, bevorzugt zumindest einen der mindestens zwei Seitenanschläge 33 und/oder den zumindest einen Hinteranschlag 34, unabhängig von dem zumindest eine Vibration oder oszillierende Bewegung erzeugenden Antrieb 46.

Beispielsweise ist der die, bevorzugt die von der Vibration oder oszillierenden Bewegung verschiedene Bewegung, weiter bevorzugt lineare, Bewegung erzeugende Antrieb 44, weiter bevorzugt der zumindest eine Linearantrieb 44, zusätzlich die Bewegung des zumindest einen Stützelements 41 von der ersten Position in dessen zweite Position oder umgekehrt erzeugend ausgebildet. Alternativ weist das zumindest eine Stützelement 41 beispielsweise einen von dem zumindest einen Linearantrieb 44 verschiedenen Antrieb auf.

Die mindestens zwei Seitenanschläge 33 und/oder der mindestens eine Hinteranschlag 34 weisen bevorzugt jeweils zumindest eine erste Position und zumindest eine zweite Position auf. Vorzugsweise ist der Abstand der mindestens zwei Seitenanschläge 33 und/oder des zumindest einen Hinteranschlags 34 jeweils zu dem zumindest einen Vorderanschlag 32 in der ersten Position zu dem Abstand in der zweiten Position verschieden. Der zumindest eine der zumindest zwei Seitenanschläge 33, bevorzugt die zumindest zwei Seitenanschläge 33, und/oder der zumindest eine Hinteranschlag 34 weisen bevorzugt in der ersten Position einen größeren Abstand zu dem jeweils gegenüberliegenden Anschlag 32; 33 auf als in der zweiten Position. Vorzugsweise entspricht der Übergang des zumindest einen Seitenanschlags 33 der zumindest zwei Seitenanschläge 33 von der jeweils ersten Position in die jeweils zweite Position einer Bewegung des zumindest einen Seitenanschlags 33 auf einen gegenüberliegenden Anschlag 33 zu. Vorzugsweise entspricht der Übergang des zumindest einen Hinteranschlags 34 von der jeweils ersten Position in die jeweils zweite Position einer Bewegung des zumindest einen Hinteranschlags 34 auf einen gegenüberliegenden Anschlag 32 zu. Ein Bereich zwischen den zumindest vier Anschlägen 32; 33; 34 weist bevorzugt innerhalb einer Ebene orthogonal zu der vertikalen Richtung V bei einer Anordnung zumindest eines der mindestens zwei Seitenanschläge 33, bevorzugt der mindestens zwei Seitenanschläge 33, und/oder des zumindest einen Hinteranschlags 34 in der ersten Position eine erste Fläche auf. Der Bereich zwischen den zumindest vier Anschlägen 32; 33; 34 weist bevorzugt innerhalb der Ebene orthogonal zu der vertikalen Richtung V bei einer Anordnung zumindest eines der mindestens zwei Seitenanschläge 33, bevorzugt der mindestens zwei Seitenanschläge 33, und/oder des zumindest einen Hinteranschlags 34 in der zweiten Position eine zweite Fläche auf. Bevorzugt ist die zweite Fläche kleiner als die erste Fläche. Bevorzugt ist der die, bevorzugt die von der Vibration oder oszillierenden Bewegung verschiedene Bewegung, weiter bevorzugt die lineare, Bewegung erzeugende Antrieb 44 jeweils die Bewegung der mindestens zwei Seitenanschläge 33 und/oder des zumindest einen Hinteranschlags 34 von der ersten Position in die zweite Position oder umgekehrt erzeugend ausgebildet. Vorzugsweise erfolgt die Bewegung der zumindest zwei Seitenanschläge 33 und/oder des zumindest einen Hinteranschlags 34 jeweils von der ersten Position in die zweite Position oder umgekehrt während des Ausrichtens des zumindest einen Teilstapels, bevorzugt zusätzlich zu einer Vibration oder oszillierenden Bewegung der Anschläge 32; 33; 34. Bevorzugt werden die mindestens zwei Seitenanschläge 33 und/oder der zumindest eine Hinteranschlag 34 jeweils von der zumindest einen ersten Position in die zumindest eine zweite Position oder umgekehrt bewegt. Bevorzugt werden der mindestens eine der mindestens zwei Seitenanschläge 33, bevorzugt die mindestens zwei Seitenanschläge 33, und/oder der zumindest eine Hinteranschlag 34 jeweils durch den zumindest einen die, bevorzugt die von der Vibration oder oszillierenden Bewegung verschiedene Bewegung, weiter bevorzugt die lineare, Bewegung erzeugende Antrieb 44 von der ersten Position in die zweite Position oder umgekehrt bewegt. Bevorzugt zusätzlich oder alternativ werden der mindestens eine der mindestens zwei Seitenanschläge 33, bevorzugt die zumindest zwei Seitenanschläge 33, und/oder der zumindest eine Hinteranschlag 34 von der ersten Position in eine weitere zweite Position verstellt, um eine Formatverstellung entsprechend des Formats der Bogen des auszurichtenden Teilstapels vorzunehmen. Beispielsweise zusätzlich zu der Formatverstellung erfolgt während der Ausrichtung die Bewegung des mindestens einen der mindestens zwei Seitenanschläge 33, bevorzugt der zumindest zwei Seitenanschläge 33, und/oder des zumindest eine Hinteranschlags 34 von der ersten Position in die zweite Position oder umgekehrt.

Bevorzugt weisen die mindestens zwei Seitenanschläge 33 und/oder der mindestens eine Hinteranschlag 34 zumindest eine Geradführung auf. Vorzugsweise ist die zumindest eine Geradführung mit Wälzkörpern und/oder Gleitlagern ausgerüstet. Die zumindest eine Geradführung ist dabei bevorzugt als mechanisches Führungselement ausgebildet, mit dessen Hilfe zumindest ein Bauteil des jeweiligen Anschlags 33; 34, bevorzugt der gesamte Seitenanschlag 33 oder Hinteranschlag 34, gegen zumindest ein anderes Bauteil, bevorzugt den zumindest einen Rahmen 47, auf einer Geraden, bevorzugt welche parallel zu der Ausrichtebene und/oder parallel zu der Flächennormalen der Ebene aufgespannt durch die Länge und Höhe des jeweiligen Anschlags 33; 34 gerichtet ist, bewegbar ist und/oder bewegt wird.

Vorzugsweise ist der zumindest eine Antrieb der zumindest einen Sperreinrichtung eine Bewegung unabhängig von dem zumindest einen Linearantrieb 44, bevorzugt von dem die von der Vibration oder oszillierenden Bewegung verschiedene Bewegung erzeugende Antrieb 44, und/oder von dem zumindest einen Vibrationsantrieb 46 erzeugend ausgebildet. Bevorzugt ist jeweils der zumindest eine Linearantrieb 44, bevorzugt alle Linearantriebe 44 der Ausrichteinrichtung 31, weiter bevorzugt der die von der Vibration oder oszillierenden Bewegung verschiedene Bewegung erzeugende Antrieb 44, und/oder der zumindest eine Vibrationsantrieb 46, bevorzugt alle Vibrationsantriebe 46 der Ausrichteinrichtung 31, und/oder der zumindest eine Antrieb der zumindest einen Sperreinrichtung und/oder zumindest ein weiterer Antrieb, beispielsweise des zumindest einen Stützelements 41 und/oder des zumindest einen Niederhalters 42, über zumindest eine vorzugsweise elektronische Leitachse miteinander verbunden.

Die Ausrichteinrichtung 31 ist bevorzugt als ein oberes Modul innerhalb des Substrathandhabungssystems ausgebildet. Beispielsweise steht die Ausrichteinrichtung 31 in Wirkverbindung mit zumindest einem unteren Modul, welches bevorzugt unterhalb der Ausrichteinrichtung 31 angeordnet ist. Das zumindest eine untere Modul ist bevorzugt als Zufuhrturm, welcher Zufuhrturm eine Menge an Teilstapeln übereinander positioniert, und/oder als zumindest eine Platte, wodurch die Ausrichteinrichtung 31 und die zumindest eine Platte insbesondere in Kombination einen konventionellen Rütteltisch ersetzen, und/oder als Transportplatte und/oder als Anleger 02, beispielsweise als der Non-Stop-Anleger 02, und/oder als Palette 16 ausgebildet.

Der zumindest eine Teilstapel wird durch die zumindest eine Ausrichteinrichtung 31 ausgerichtet und/oder gelockert. Der zumindest eine Teilstapel wird dazu in der Ausrichteinrichtung 31 positioniert. Beispielsweise wird der zumindest eine Teilstapel durch den zumindest einen Roboter 12 oder durch einen Bediener in der Ausrichteinrichtung 31 positioniert, insbesondere abgelegt. Der zumindest eine Teilstapel wird bei der Positionierung in der Ausrichteinrichtung 31 auf dem zumindest einen Stützelement 41, bevorzugt auf zumindest zwei Stützelementen 41 von zumindest zwei Anschlägen 33; 34, abgelegt. Es wird der zumindest eine Teilstapel bei der Positionierung in der Ausrichteinrichtung 31 auf dem zumindest einen Stützelement 41 jeweils angeordnet an den mindestens zwei Seitenanschlägen 33 abgelegt. Zusätzlich wird der zumindest eine Teilstapel bei der Positionierung in der Ausrichteinrichtung 31 auf dem zumindest einen Stützelement 41 angeordnet an dem zumindest einen Hinteranschlag 34 abgelegt. Der zumindest eine Teilstapel wird bei der Positionierung in der Ausrichteinrichtung 31 auf dem zumindest einen Stützelement 41 jeweils angeordnet an den mindestens zwei Seitenanschlägen 33 und dem zumindest einen Stützelement 41 angeordnet an dem zumindest einen Hinteranschlag 34 abgelegt.

Der zumindest eine Vorderanschlag 32 ist bevorzugt in seiner Position, bevorzugt zumindest zeitweise, fixiert. Die zumindest zwei als Seitenanschläge 33 ausgebildeten Anschläge 33 und der zumindest eine als Hinteranschlag 34 ausgebildete Anschlag 34 der zumindest vier Anschläge 32; 33; 34 werden zumindest zeitweise bewegt und/oder sind bewegbar ausgebildet.

Vorzugsweise werden seitliche Kanten des Teilstapels und/oder seitliche Kanten der Bogen von den zumindest vier Anschlägen 32; 33; 34 begrenzt. Insbesondere stehen die zumindest vier Anschläge 32; 33; 34 zumindest zeitweise in direktem Kontakt, also ohne weitere Elemente dazwischen, zu dem zumindest einen Teilstapel und/oder den Bogen des Teilstapels.

Der zumindest eine Teilstapel wird bevorzugt nach einem ersten Ausrichten gelockert und dann in der Ausrichteinrichtung 31 wieder ausgerichtet. Vorzugsweise wird der zumindest eine Teilstapel, beispielsweise als Bestandteil des zumindest einen Substratstapels 14, in dem Zufuhrsystem 06 ausgerichtet, beispielsweise als eine erste Ausrichtung innerhalb des Substrathandhabungssystems. Bevorzugt wird der zumindest eine Teilstapel dann aus dem zumindest einen Substratstapel 14 entnommen und gelockert. Insbesondere erfolgt die Lockerung durch einen Bediener oder alternativ den zumindest einen Roboter 12 der Roboterzelle 11. Vorzugsweise im Anschluss an die Lockerung ist es notwendig, den zumindest einen Teilstapel erneut auszurichten, sodass insbesondere die Kanten der Bogen des Teilstapels vorzugsweise exakt übereinander angeordnet sind, wobei jedoch die gelockerte Anordnung der Bogen zueinander erhalten bleibt. Das anschließende Ausrichten und weiteres Lockern erfolgt in der zumindest einen Ausrichteinrichtung 31.

Bevorzugt wird mindestens einer der mindestens zwei Seitenanschläge 33 und/oder der zumindest eine Hinteranschlag 34 jeweils durch zumindest zwei Antriebe 44; 46 bewegt.

Insbesondere während der Ausrichtung des zumindest einen Teilstapels werden bevorzugt zumindest einer der mindestens zwei Seitenanschläge 33, bevorzugt die zumindest zwei Seitenanschläge 33, und/oder der zumindest eine Hinteranschlag 34 in Richtung des zumindest einen Teilstapels bewegt. Vorzugsweise wird der mindestens eine der mindestens zwei Seitenanschläge 33 und/oder der zumindest eine Hinteranschlag 34 jeweils durch den zumindest einen mindestens eine, bevorzugt die von der Vibration oder oszillierenden Bewegung verschiedene Bewegung, weiter bevorzugt lineare, Bewegung erzeugenden Antrieb 44 bewegt. Bevorzugt werden die zumindest zwei Seitenanschläge 33 und/oder der zumindest eine Hinteranschlag 34 durch jeweils mindestens einen eigenen die Bewegung, bevorzugt die die von der Vibration oder oszillierenden Bewegung verschiedene Bewegung, weiter bevorzugt lineare Bewegung, erzeugenden Antrieb 44 von der ersten Position in die zweite Position oder umgekehrt bewegt.

Bevorzugt zusätzlich oder alternativ erzeugt bevorzugt während der Ausrichtung des zumindest einen Teilstapels zumindest einer der zumindest vier Anschläge 32; 33; 34, bevorzugt zumindest zwei, weiter bevorzugt zumindest drei, weiter bevorzugt die zumindest vier Anschläge 32; 33; 34, weiter bevorzugt alle Anschläge 32; 33; 34, zumindest eine Vibration und/oder vibriert. Bevorzugt werden die mindestens zwei Seitenanschläge 33 und/oder der zumindest eine Hinteranschlag 34 und/oder der zumindest eine Vorderanschlag 32 jeweils durch den zumindest einen eine Vibration und/oder oszillierende Bewegung erzeugenden Antrieb 46, bevorzugt durch jeweils einen eigenen Antrieb 46, in Vibration und/oder in eine oszillierende Bewegung versetzt. Vorzugsweise vibriert während der Ausrichtung des zumindest einen Teilstapels das zumindest eine Stützelement 41, bevorzugt durch die Vibration des zumindest einen das Stützelement 41 aufweisenden Anschlags 33; 34 und/oder bevorzugt zusammen mit dem zumindest einen das Stützelement 41 aufweisenden Anschlag 33; 34. Vorzugsweise versetzt der zumindest eine die Vibration oder oszillierende Bewegung erzeugende Antrieb 46 das zumindest eine Stützelement 41 in Vibration oder eine oszillierende Bewegung.

Weiter bevorzugt werden zumindest der mindestens eine der mindestens zwei Seitenanschläge 33 und/oder der zumindest eine Hinteranschlag 34 jeweils durch den eine Vibration und/oder oszillierende Bewegung erzeugenden Antrieb 46 in Vibration und/oder in eine oszillierende Bewegung versetzt und zeitgleich durch den zumindest einen mindestens eine lineare Bewegung erzeugenden Antrieb 44 linear bewegt. Bevorzugt werden zumindest zwei der zumindest vier Anschläge 32; 33; 34, bevorzugt alle Anschläge 32; 33; 34, in Vibration und/oder eine oszillierende Bewegung versetzt, während vorzugsweise lediglich zumindest einer der mindestens zwei Seitenanschläge 33 und/oder der zumindest eine Hinteranschlag 34 in Bewegung in oder entgegen der Richtung des gegenüberliegenden Anschlags 32; 33 und/oder des zumindest einen Teilstapels versetzt werden.

Bevorzugt stößt die zumindest eine Düse 37, bevorzugt die mindestens zwei Düsen 37, der Blaseinrichtung zumindest während des Ausrichtens des Teilstapels Fluid, insbesondere Luft, aus. Vorzugsweise verlässt das das Fluid, insbesondere die Luft, die zumindest eine Düse 37, bevorzugt die mindestens zwei Düsen 37, in Austrittsrichtung. Insbesondere unterstützt das ausgestoßene Fluid die Lockerung des Teilstapels in der Ausrichteinrichtung 31. Vorzugsweise wird die Geschwindigkeit des ausgestoßenen Fluides in Abhängigkeit von der Anzahl an Bogen in dem Teilstapel und/oder von der Dicke der Bogen und/oder von der Formatgröße der Bogen verändert und/oder angepasst. Vorzugsweise erzeugt das Fluid unterhalb des untersten Bogens des zumindest einen Teilstapels ein Luftkissen und zusätzlich oder alternativ lockert das Fluid die einzelnen Bogen des zumindest einen Teilstapels durch dessen Eindringen zwischen die einzelnen Bogen.

Insbesondere das ausgestoßene Fluid sowie beispielsweise weiteres durch den zumindest einen Teilstapel aufgestautes Fluid, insbesondere Luft, entweicht bevorzugt aus dem Bereich zwischen den zumindest vier Anschlägen 32; 33; 34 durch die zumindest eine Auslassöffnung des zumindest einen Auslasssystems 38. Beispielsweise entweicht das zumindest eine Fluid lediglich durch dessen Bewegung durch die zumindest eine Auslassöffnung. Beispielsweise zusätzlich wird das zumindest eine Fluid durch die zumindest eine Auslassöffnung abgesaugt.

Der Ausdruck "zumindest zeitweise" beschreibt im Vorangegangenen und im Folgenden bevorzugt einen Zustand und/oder Ablauf, welcher zu zumindest einem Zeitpunkt vorliegt und/oder durchgeführt wird. Vorzugsweise beschreibt "zumindest zeitweise" einen Zustand und/oder Ablauf, welcher zumindest während des Positionierens und/oder des Ausrichtens des zumindest einen Teilstapels in der Ausrichteinrichtung 31 vorliegt und/oder durchgeführt wird. Der Ausdruck "in einer Position fixiert" beschreibt im Vorangegangenen und im Folgenden bevorzugt, dass der zumindest eine Anschlag 32; 33; 34 nicht von einer ersten Position in eine zweite Position bewegt wird, sondern in seiner derzeit angeordneten Position verweilt. Beispielsweise ist während einer Fixierung in der Position ein Vibrieren des zumindest einen Anschlags 32; 33; 34 möglich.

Bevorzugt sind zumindest zeitweise, bevorzugt während des Ausrichtens des zumindest einen Teilstapels in der Ausrichteinrichtung 31, mindestens der zumindest eine Vorderanschlag 32 und zumindest einer der mindestens zwei Seitenanschläge 33 in ihrer Position fixiert und/oder werden fixiert. Bevorzugt sind der zumindest eine Vorderanschlag 32 und der zumindest eine der mindestens zwei Seitenanschläge 33 innerhalb der Ausrichtebene in dessen jeweiliger Position zumindest zeitweise fixiert ausgebildet. Weiter bevorzugt sind der zumindest eine Vorderanschlag 32 und der zumindest eine der mindestens zwei Seitenanschläge 33 insbesondere innerhalb der Ausrichtebene zumindest zeitweise nicht linear bewegbar und/oder sich nicht linear bewegend ausgebildet. Dabei weisen der zumindest eine Vorderanschlag 32 und der zumindest eine der mindestens zwei Seitenanschläge 33 bevorzugt einen zumindest für diese Zeitdauer konstanten Abstand zu dem Rahmen 47 der Ausrichteinrichtung 31 auf. Vorzugsweise erzeugen der zumindest eine Vorderanschlag 32 und der zumindest eine der mindestens zwei Seitenanschläge 33 dadurch zwei vorzugsweise feststehende Begrenzungen, gegen welche der zumindest eine Teilstapel bevorzugt ausgerichtet wird.

Bevorzugt sind zumindest zeitweise der zumindest eine Hinteranschlag 34 und zumindest ein weiterer der mindestens zwei Seitenanschläge 33 zumindest zeitweise ihren jeweiligen Abstand zu dem, bevorzugt fixierten, Vorderanschlag 32 oder zu dem, bevorzugt fixierten, Seitenanschlag 33 verringernd oder vergrößernd ausgebildet, bevorzugt zumindest während des Ausrichtens des zumindest einen Teilstapels in der Ausrichteinrichtung 31. Bevorzugt werden der zumindest eine Hinteranschlag 34 und der zumindest eine weitere der mindestens zwei Seitenanschläge 33 zumindest zeitweise, bevorzugt zumindest während der Ausrichtung des zumindest einen Teilstapels in der Ausrichteinrichtung 31, auf den, bevorzugt fixierten, Vorderanschlag 32 oder auf den, bevorzugt zumindest zeitweise fixierten, Seitenanschlag 33 zu bewegt. Bevorzugt erfolgt die Bewegung in Richtung des, bevorzugt fixierten, Vorderanschlags 32 oder des, bevorzugt zumindest zeitweise fixierten, Seitenanschlags 33 zumindest so lange, bis der Abstand zwischen den zueinander gegenüberliegenden Anschlägen 32; 33; 34 der Ausdehnung eines Bogens des zumindest einen Teilstapels, insbesondere entsprechend dessen Formatgröße, in Richtung dieses Abstands entspricht. Weiter bevorzugt werden der zumindest eine Hinteranschlag 34 und der zumindest eine weitere der mindestens zwei Seitenanschläge 33 so lange auf den, bevorzugt fixierten, Vorderanschlag 32 und/oder auf den, bevorzugt zumindest zeitweise fixierten, Seitenanschlag 33 zu bewegt, bis der Abstand der zueinander gegenüberliegenden Anschläge 32; 33; 34 die Ausdehnung des Bogens, also dessen Formatgröße, in Richtung dieses Abstands um mindestens 0 mm (null Millimeter), bevorzugt um mindestens 3 mm (drei Millimeter), und/oder um maximal 20 mm (zwanzig Millimeter), bevorzugt um maximal 15 mm (fünfzehn Millimeter), weiter bevorzugt um maximal 10 mm (zehn Millimeter), unterschreitet. Bevorzugt steht somit der Bogen zumindest zeitweise in Kontakt zu den mindestens vier Anschlägen 32; 33; 34 und/oder ist bevorzugt zumindest zeitweise gestaucht, also unter seine eigentliche Formatgröße zusammengedrückt.

Bevorzugt erfolgt die Bewegung des zumindest einen Hinteranschlags 34 und des zumindest einen weiteren der mindestens zwei Seitenanschläge 33 in Richtung des, bevorzugt fixierten, Vorderanschlags 32 und/oder des, bevorzugt zumindest zeitweise fixierten, Seitenanschlags 33 in einem Pilgerschrittverfahren, also in einem Wechsel aus Vorwärtsbewegung und Rückwärtsbewegung. Vorzugsweise wird jeweils für zumindest 3 mm (drei Millimeter), bevorzugt für zumindest 5 mm (fünf Millimeter), eine Vorwärtsbewegung in Richtung des, bevorzugt fixierten, Vorderanschlags 32 und/oder des, bevorzugt zumindest zeitweise fixierten, Seitenanschlags 33 durchgeführt, an welche sich jeweils bevorzugt eine Rückwärtsbewegung entgegen der Richtung des, bevorzugt fixierten, Vorderanschlags 32 und/oder des, bevorzugt zumindest zeitweise fixierten, Seitenanschlags 33 von mindestens einem Millimeter, bevorzugt von mindestens 2 mm (zwei Millimeter), anschließt.

Der zumindest eine Teilstapel wird bevorzugt nach der Ausrichteinrichtung 31 an das zumindest eine Druckwerk 03 der Bogenbearbeitungsmaschine 01 und/oder an den zumindest einen Anleger 02 der Bogenbearbeitungsmaschine 01 und/oder an das zumindest eine die Bogen bearbeitende Aggregat geleitet und/oder übergeben. Beispielsweise wird der zumindest eine Teilstapel dafür in einzelne Bogen zerlegt, welche beispielsweise in einer geschuppten oder voneinander beabstandeten Anordnung weitergeleitet werden.

Mindestens eine Palette 16 und/oder mindestens ein Gabelsystem und/oder mindestens eine Platte und/oder mindestens ein zumindest zeitweise einen Boden erzeugendes Objekt wird unterhalb der Ausrichteinrichtung 31 und/oder unterhalb des zumindest einen Stützelements 41 und/oder unterhalb der Ausrichtebene positioniert. Vorzugsweise wird dann, bevorzugt im Anschluss an das Ausrichten durch die Ausrichteinrichtung 31, insbesondere durch die Bewegung des zumindest einen Stützelements 41 von der ersten, ausgefahrenen Position in die zweite, eingefahrene Position der ausgerichtete Teilstapel ohne weitere Elemente oder Einrichtungen dazwischen an die mindestens eine Palette 16 und/oder das mindestens eine Gabelsystem und/oder die mindestens eine Platte und/oder das mindestens eine zumindest zeitweise einen Boden erzeugende Objekt abgegeben. Weiter bevorzugt werden zumindest zwei Stützelemente 41, weiter bevorzugt mindestens drei Stützelemente 41, weiter bevorzugt alle Stützelemente 41, von der ersten, ausgefahrenen Position in die zweite, eingefahrene Position bewegt. Bevorzugt wird durch die Bewegungen der Stützelemente 41 der ausgerichtete Teilstapel an die mindestens eine Palette 16 und/oder das mindestens eine Gabelsystem und/oder die mindestens eine Platte und/oder das mindestens eine zumindest zeitweise einen Boden erzeugende Objekt abgegeben. Vorzugsweise werden so insbesondere unterhalb der Ausrichteinrichtung 31 mindestens zwei, bevorzugt mindestens drei, weiter bevorzugt mehrere, Teilstapel übereinander abgelegt und/oder gesammelt. Beispielsweise wird dadurch der zumindest eine Teilstapel einem Substratstapel 14 zugeführt, welcher dann mindestens 1.000 Bogen (eintausend Bogen), bevorzugt mindestens 2.000 Bogen, und/oder maximal 10.000 Bogen, bevorzugt maximal 8.000 Bogen, umfasst.

Bevorzugt zusätzlich oder alternativ erfolgt eine Entnahme des zumindest einen Teilstapels aus der Ausrichteinrichtung 31 seitlich. Bevorzugt wird dazu zumindest einer der zumindest vier Anschläge 32; 33; 34 von einer ersten, aufgerichteten Position in eine zweite, geschwenkte Position geschwenkt. Dabei ist bevorzugt in der zweiten, geschwenkten Position dessen Seitenfläche aufgespannt durch die Höhe und Länge zumindest zeitweise parallel zu der Ausrichtebene angeordnet. Der ausgerichtete Teilstapel wird dann bevorzugt bei dem zumindest einen in der zweiten, geschwenkten Position angeordneten Anschlag 32; 33; 34 aus der Ausrichteinrichtung 31 entnommen.

### Bezugszeichenliste

- 01: Verarbeitungsmaschine, Bogenbearbeitungsmaschine
- 02: Anleger, Non-Stop-Anleger
- 03: Druckwerk
- 04: Auslage
- 05: -
- 06: Zufuhrsystem
- 07: Bereitstellungsplatz
- 08: Logistiksystem
- 09: Container
- 10: -
- 11: Roboterzelle
- 12: Roboter, Zwei-Arm-Roboter
- 13: Greifersystem
- 14: Substratstapel
- 15: -
- 16: Palette, Non-Stop-Systempalette
- 17: Stapelbretter
- 18: Distanzbleche
- 19: -
- 20: -
- 21: Vakuum-Zählscheibe
- 22: Zählscheibe
- 23: Vakuumschlauch
- 24: Motor
- 25: -
- 26: Messeinrichtung
- 27: Rahmen
- 28: -
- 29: -
- 30: -
- 31: Ausrichteinrichtung
- 32: Anschlag, Vorderanschlag
- 33: Anschlag, Seitenanschlag
- 34: Anschlag, Hinteranschlag
- 35: -
- 36: -
- 37: Düse
- 38: Auslasssystem
- 39: -
- 40: -
- 41: Stützelement
- 42: Niederhalter
- 43: -
- 44: Antrieb, Linearantrieb
- 45: -
- 46: Antrieb, Vibrationsantrieb
- 47: Rahmen (31)
- F: Förderrichtung
- V: Richtung, vertikal

## Patentansprüche

1. Substrathandhabungssystem mit einer Bogenbearbeitungsmaschine (01) und zumindest einer Ausrichteinrichtung (31), wobei die zumindest eine Ausrichteinrichtung (31) zumindest vier Anschläge (32; 33; 34) umfasst, wobei zumindest ein Anschlag (32) als Vorderanschlag (32) und zumindest ein Anschlag (34) als Hinteranschlag (34) und mindestens zwei Anschläge (33) jeweils als Seitenanschlag (33) ausgebildet sind, wobei die mindestens zwei Seitenanschläge (33) zueinander gegenüberliegend angeordnet sind, wobei der zumindest eine Vorderanschlag (32) und der zumindest eine Hinteranschlag (34) zueinander gegenüberliegend angeordnet sind, wobei die Ausrichteinrichtung (31) zumindest ein Stützelement (41) aufweist, wobei das zumindest eine Stützelement (41) als Auflageelement zur Auflage zumindest eines Teilstapels von Bogen in der Ausrichteinrichtung (31) ausgebildet ist, wobei an den zumindest zwei Seitenanschlägen (33) und an dem zumindest einen Hinteranschlag (34) jeweils zumindest ein Stützelement (41) angeordnet ist, **dadurch gekennzeichnet, dass** ohne weitere Elemente oder Einrichtungen dazwischen unterhalb der zumindest einen Ausrichteinrichtung (31) und/oder unterhalb des zumindest einen Stützelements (41) mindestens eine Palette (16) und/oder mindestens ein Gabelsystem und/oder mindestens eine Platte und/oder mindestens ein zumindest zeitweise einen Boden erzeugendes Objekt angeordnet ist.

2. Substrathandhabungssystem nach Anspruch 1, **dadurch gekennzeichnet, dass** die zumindest vier Anschläge (32; 33; 34) jeweils zumindest einen eine Vibration oder oszillierende Bewegung erzeugenden Antrieb (46) aufweisen und/oder dass die mindestens zwei Seitenanschläge (33) und/oder der zumindest eine Hinteranschlag (34) jeweils zumindest einen eine Bewegung des zumindest einen Stützelements (41) erzeugenden Antrieb aufweisen und/oder dass die mindestens zwei Seitenanschläge (33) und/oder der zumindest eine Hinteranschlag (34) jeweils zumindest einen mindestens eine von der Vibration oder oszillierenden Bewegung verschiedene Bewegung erzeugenden Antrieb (44) aufweisen.

3. Substrathandhabungssystem nach Anspruch 1 oder 2, **dadurch gekennzeichnet, dass** das zumindest eine Stützelement (41) jeweils zumindest zwei Positionen aufweist, dass das zumindest eine Stützelement (41) von dessen Spitze zu dem das jeweilige zumindest eine Stützelement (41) aufweisenden Seitenanschlag (33) oder zu dem das jeweilige zumindest eine Stützelement (41) aufweisenden Hinteranschlag (34) in der ersten Position einen ersten Abstand und in der zweiten Position einen zweiten Abstand aufweist, dass der erste Abstand in der ersten Position größer ist als der zweite Abstand in der zweiten Position.

4. Substrathandhabungssystem nach Anspruch 2 oder 3, **dadurch gekennzeichnet, dass** der zumindest eine Vibration oder oszillierende Bewegung erzeugende Antrieb (46) das zumindest eine Stützelement (41) in Vibration oder eine oszillierende Bewegung versetzend ausgebildet ist und/oder dass jeder der mindestens zwei Seitenanschläge (33) und der zumindest eine Hinteranschlag (34) jeweils zumindest einen eigenen die Vibration oder oszillierende Bewegung erzeugenden Antrieb (46) aufweisen und/oder dass die Frequenz der Vibration oder der oszillierenden Bewegung der zumindest vier Anschläge (32; 33; 34) in Abhängigkeit von der Formatgröße von Bogen und/oder von dem Flächengewicht von Bogen und/oder des Materials des Substrats eingestellt ist und/oder einstellbar ist.

5. Substrathandhabungssystem nach Anspruch 1 oder 2 oder 3 oder 4, **dadurch gekennzeichnet, dass** die mindestens zwei Seitenanschläge (33) und/oder der zumindest eine Hinteranschlag (34) jeweils zumindest eine erste Position und zumindest eine zweite Position aufweisen und/oder dass zumindest zeitweise mindestens der zumindest eine Vorderanschlag (32) und zumindest einer der mindestens zwei Seitenanschläge (33) in ihrer Position fixiert und zumindest zeitweise der zumindest eine Hinteranschlag (34) und zumindest ein weiterer der mindestens zwei Seitenanschläge (33) zumindest zeitweise ihren jeweiligen Abstand zu dem fixierten Vorderanschlag (32) oder zu dem fixierten Seitenanschlag (33) verringernd oder vergrößernd ausgebildet sind.

6. Substrathandhabungssystem nach Anspruch 2 oder 3 oder 4 oder 5, **dadurch gekennzeichnet, dass** der zumindest eine mindestens eine von der Vibration oder oszillierenden Bewegung verschiedene Bewegung erzeugende Antrieb (44) jeweils die Bewegung der mindestens zwei Seitenanschläge (33) und/oder des zumindest einen Hinteranschlags (34) von der ersten Position in die zweite Position oder umgekehrt erzeugend ausgebildet ist und/oder dass der zumindest eine mindestens eine von der Vibration oder oszillierenden Bewegung verschiedene Bewegung erzeugende Antrieb (44) unabhängig von dem zumindest eine Vibration oder oszillierende Bewegung erzeugenden Antrieb (46) ausgebildet ist und/oder dass die mindestens zwei Seitenanschläge (33) und der zumindest eine Hinteranschlag (34) jeweils zumindest einen eigenen die mindestens eine von der Vibration oder oszillierenden Bewegung verschiedene Bewegung erzeugenden Antrieb (44) aufweisen.

7. Substrathandhabungssystem nach Anspruch 1 oder 2 oder 3 oder 4 oder 5 oder 6, **dadurch gekennzeichnet, dass** die Ausrichteinrichtung (31) vor zumindest einem Druckwerk (03) der Bogenbearbeitungsmaschine (01) und/oder vor zumindest einem Anleger (02) der Bogenbearbeitungsmaschine (01) und/oder vor zumindest einem die Bogen bearbeitenden Aggregat und/oder in einem Zufuhrsystem (06) der Bogenbearbeitungsmaschine (01) und/oder innerhalb des Wirkbereichs einer Roboterzelle (11) angeordnet ist.

8. Substrathandhabungssystem nach Anspruch 1 oder 2 oder 3 oder 4 oder 5 oder 6 oder 7, **dadurch gekennzeichnet, dass** an den mindestens zwei Seitenanschlägen (33) und/oder an dem zumindest einen Hinteranschlag (34) jeweils zumindest ein Niederhalter (42) angeordnet ist.

9. Substrathandhabungssystem nach Anspruch 1 oder 2 oder 3 oder 4 oder 5 oder 6 oder 7 oder 8, **dadurch gekennzeichnet, dass** mindestens einer der zumindest vier Anschläge (32; 33; 34) mindestens eine Blaseinrichtung umfasst und die mindestens eine Blaseinrichtung mindestens eine Fluid ausstoßende Düse (37) umfasst und/oder dass mindestens einer der zumindest vier Anschläge (32; 33; 34) mindestens ein Auslasssystem (38) mit mindestens einer Auslassöffnung aufweist und Fluid aus einem Bereich zwischen den zumindest vier Anschlägen (32; 33; 34) durch die mindestens eine Auslassöffnung entweichend ausgebildet ist.

10. Verfahren zur Ausrichtung und/oder Lockerung zumindest eines Teilstapels von Bogen in einem Substrathandhabungssystem mit einer Bogenbearbeitungsmaschine (01), wobei der zumindest eine Teilstapel in einer Ausrichteinrichtung (31) positioniert wird, wobei der zumindest eine Teilstapel durch die Ausrichteinrichtung (31) ausgerichtet und/oder gelockert wird, wobei die Ausrichteinrichtung (31) zumindest vier Anschläge (32; 33; 34) umfasst, wobei zumindest ein Anschlag (32) als Vorderanschlag (32) und zumindest ein Anschlag (34) als Hinteranschlag (34) und mindestens zwei Anschläge (33) jeweils als Seitenanschlag (33) ausgebildet sind, wobei die mindestens zwei Seitenanschläge (33) zueinander gegenüberliegend angeordnet sind, wobei der zumindest eine Vorderanschlag (32) und der zumindest eine Hinteranschlag (34) zueinander gegenüberliegend angeordnet sind, wobei die mindestens zwei Seitenanschläge (33) und der zumindest eine Hinteranschlag (34) der zumindest vier Anschläge (32; 33; 34) zumindest zeitweise bewegt werden, wobei der zumindest eine Teilstapel bei der Positionierung in der Ausrichteinrichtung (31) auf zumindest einem Stützelement (41) abgelegt wird, wobei der zumindest eine Teilstapel bei der Positionierung in der Ausrichteinrichtung (31) auf zumindest einem Stützelement (41) jeweils angeordnet an den mindestens zwei Seitenanschlägen (33) und zumindest einem Stützelement (41) angeordnet an dem zumindest einen Hinteranschlag (34) abgelegt wird, **dadurch gekennzeichnet, dass** mindestens eine Palette (16) und/oder mindestens ein Gabelsystem und/oder mindestens eine Platte und/oder mindestens ein zumindest zeitweise einen Boden erzeugendes Objekt unterhalb der Ausrichteinrichtung (31) und/oder unterhalb des zumindest einen Stützelements (41) positioniert wird.

11. Verfahren nach Anspruch 10, **dadurch gekennzeichnet, dass** die mindestens zwei Seitenanschläge (33) und/oder der zumindest eine Hinteranschlag (34) jeweils durch zumindest einen eine Vibration und/oder oszillierende Bewegung erzeugenden Antrieb (46) in Vibration und/oder in eine oszillierende Bewegung versetzt werden und/oder dass der zumindest eine Vorderanschlag (32) jeweils durch zumindest einen eine Vibration und/oder oszillierende Bewegung erzeugenden Antrieb (46) in Vibration und/oder in eine oszillierende Bewegung versetzt wird.

12. Verfahren nach Anspruch 10 oder 11, **dadurch gekennzeichnet, dass** das zumindest eine Stützelement (41) von einer ersten, ausgefahrenen Position in eine zweite, eingefahrene Position und/oder umgekehrt bewegt wird und/oder dass während der Ausrichtung des zumindest einen Teilstapels zumindest einer der mindestens zwei Seitenanschläge (33) und der zumindest eine Hinteranschlag (34) in Richtung des zumindest einen Teilstapels bewegt werden und/oder dass die mindestens zwei Seitenanschläge (33) und/oder der zumindest eine Hinteranschlag (34) jeweils von zumindest einer ersten Position in zumindest eine zweite Position oder umgekehrt bewegt werden.

13. Verfahren nach Anspruch 10 oder 11 oder 12, **dadurch gekennzeichnet, dass** der zumindest eine Teilstapel nach einem ersten Ausrichten gelockert wird und dann in der Ausrichteinrichtung (31) wieder ausgerichtet wird und/oder dass der zumindest eine Teilstapel nach der Ausrichteinrichtung (31) an zumindest ein Druckwerk (03) der Bogenbearbeitungsmaschine (01) und/oder an zumindest einen Anleger (02) der Bogenbearbeitungsmaschine (01) und/oder an zumindest ein die Bogen bearbeitendes Aggregat geleitet und/oder übergeben wird.

14. Verfahren nach Anspruch 10 oder 11 oder 12 oder 13, **dadurch gekennzeichnet, dass** an den mindestens zwei Seitenanschlägen (33) und/oder an dem zumindest einen Hinteranschlag (34) jeweils zumindest ein Niederhalter (42) angeordnet ist.

15. Verfahren nach Anspruch 10 oder 11 oder 12 oder 13 oder 14, **dadurch gekennzeichnet, dass** zumindest einer der zumindest vier Anschläge (32; 33; 34) zumindest eine Blaseinrichtung umfasst und zumindest eine Düse (37) der Blaseinrichtung zumindest während des Ausrichtens des Teilstapels Fluid ausstößt und/oder dass mindestens einer der zumindest vier Anschläge (32; 33; 34) mindestens ein Auslasssystem (38) mit mindestens einer Auslassöffnung aufweist und Fluid aus einem Bereich zwischen den zumindest vier Anschlägen (32; 33; 34) durch die mindestens eine Auslassöffnung entweicht.

## Claims

1. Substrate handling system comprising a sheet processing machine (01) and at least one alignment device (31), the at least one alignment device (31) comprising at least four stops (32; 33; 34), at least one stop (32) being configured as a front stop (32) and at least one stop (34) being configured as a rear stop (34), and at least two stops (33) being configured in each case as a lateral stop (33), the at least two lateral stops (33) being arranged opposite one another, the at least one front stop (32) and the at least one rear stop (34) being arranged opposite one another, the alignment device (31) comprising at least one support element (41), the at least one support element (41) being configured as a propping element for propping at least one partial stack of sheets in the alignment device (31), at least one respective support element (41) being arranged at the at least two lateral stops (33) and at the at least one rear stop (34), **characterized in that** at least one pallet (16) and/or at least one fork system and/or at least one plate and/or at least one object that at least temporarily creates a base is arranged beneath the at least one alignment device (31) and/or beneath the at least one support element (41), without further elements or devices therebetween.

2. Substrate handling system according to claim 1, **characterized in that** the at least four stops (32; 33; 34) each comprise at least one drive (46) generating a vibration or an oscillating movement, and/or **in that** the at least two lateral stops (33) and/or the at least one rear stop (34) each comprise at least one drive generating a movement of the at least one support element (41), and/or **in that** the at least two lateral stops (33) and/or the at least one rear stop (34) each comprise at least one drive (44) generating at least one movement that differs from the vibration or oscillating movement.

3. Substrate handling system according to claim 1 or 2, **characterized in that** the at least one support element (41) in each case has at least two positions, **in that** the at least one support element (41) has, from its tip to the lateral stop (33) comprising the respective at least one support element (41) or to the rear stop (34) comprising the respective at least one support element (41), a first distance in the first position and a second distance in the second position, **in that** the first distance in the first position is greater than the second distance in the second position.

4. Substrate handling system according to claim 2 or 3, **characterized in that** the at least one drive (46) generating a vibration or an oscillating movement is configured to cause the at least one support element (41) to carry out a vibration or an oscillating movement, and/or **in that** each of the at least two lateral stops (33) and the at least one rear stop (34) comprise in each case at least one dedicated drive (46) generating the vibration or oscillating movement, and/or **in that** the frequency of the vibration or oscillating movement of the at least four stops (32; 33; 34) is set and/or can be set as a function of the format size of sheets and/or the grammage of sheets and/or the material of the substrate.

5. Substrate handling system according to claim 1 or 2 or 3 or 4, **characterized in that** the at least two lateral stops (33) and/or the at least one rear stop (34) each have at least one first position and at least one second position, and/or **in that** at least the at least one front stop (32) and at least one of the at least two lateral stops (33) are fixed in their positions at least temporarily and, at least temporarily, the at least one rear stop (34) and at least one other of the at least two lateral stops (33) are configured to at least temporarily decrease or increase their respective distance with respect to the fixed front stop (32) or with respect to the fixed lateral stop (33).

6. Substrate handling system according to claim 2 or 3 or 4 or 5, **characterized in that** the at least one drive (44) generating at least one movement that differs from the vibration or oscillating movement is configured in each case to generate the movement of the at least two lateral stops (33) and/or of the at least one rear stop (34) from the first position into the second position, or vice versa, and/or **in that** the at least one drive (44) generating at least one movement that differs from the vibration or oscillating movement is configured independently from the drive (46) generating at least one vibration or oscillating movement, and/or **in that** the at least two lateral stops (33) and the at least one rear stop (34) each comprise at least one dedicated drive (44) generating the at least one movement that differs from the vibration or oscillating movement.

7. Substrate handling system according to claim 1 or 2 or 3 or 4 or 5 or 6, **characterized in that** the alignment device (31) is arranged upstream from at least one printing unit (03) of the sheet processing machine (01) and/or upstream from at least one feeder (02) of the sheet processing machine (01) and/or upstream from at least one unit processing the sheets and/or in an infeed system (06) of the sheet processing machine (01) and/or within the operating zone of a robot cell (11).

8. Substrate handling system according to claim 1 or 2 or 3 or 4 or 5 or 6 or 7, **characterized in that** at least one hold-down device (42) is arranged in each case at the at least two lateral stops (33) and/or at the at least one rear stop (34).

9. Substrate handling system according to claim 1 or 2 or 3 or 4 or 5 or 6 or 7 or 8, **characterized in that** at least one of the at least four stops (32; 33; 34) includes at least one blower device and the at least one blower device comprises at least one nozzle (37) that ejects fluid, and/or **in that** at least one of the at least four stops (32; 33; 34) comprises at least one outlet system (38) including at least one outlet opening, and fluid is configured to escape from a region between the at least four stops (32; 33; 34) through the at least one outlet opening.

10. Method for aligning and/or loosening at least one partial stack of sheets in a substrate handling system comprising a sheet processing machine (01), the at least one partial stack being positioned in an alignment device (31), the at least one partial stack being aligned and/or loosened by the alignment device (31), the alignment device (31) comprising at least four stops (32; 33; 34), at least one stop (32) being configured as a front stop (32) and at least one stop (34) being configured as a rear stop (34), and at least two stops (33) being configured in each case as a lateral stop (33), the at least two lateral stops (33) being arranged opposite one another, the at least one front stop (32) and the at least one rear stop (34) being arranged opposite one another, the at least two lateral stops (33) and the at least one rear stop (34) of the at least four stops (32; 33; 34) being moved at least temporarily, the at least one partial stack, while being positioned in the alignment device (31), being deposited onto at least one support element (41), the at least one partial stack, while being positioned in the alignment device (31), being deposited onto at least one support element (41) that is in each case arranged at the at least two lateral stops (33), and onto at least one support element (41) that is arranged at the at least one rear stop (34), **characterized in that** at least one pallet (16) and/or at least one fork system and/or at least one plate and/or at least one object that at least temporarily creates a base is positioned beneath the alignment device (31) and/or beneath the at least one support element (41).

11. Method according to claim 10, **characterized in that** the at least two lateral stops (33) and/or the at least one rear stop (34) are each caused to carry out a vibration and/or an oscillating movement by at least one drive (46) generating a vibration and/or an oscillating movement, and/or **in that** the at least one front stop (32) is in each case caused to carry out a vibration and/or an oscillating movement by at least one drive (46) generating a vibration and/or an oscillating movement.

12. Method according to claim 10 or 11, **characterized in that** the at least one support element (41) is moved from a first, extended position into a second, retracted position, and/or vice versa, and/or **in that** at least one of the at least two lateral stops (33) and the at least one rear stop (34) are moved in the direction of the at least one partial stack while the at least one partial stack is being aligned, and/or **in that** the at least two lateral stops (33) and/or the at least one rear stop (34) are in each case moved from at least one first position into at least one second position, or vice versa.

13. Method according to claim 10 or 11 or 12, **characterized in that** the at least one partial stack is loosened after a first alignment, and is then aligned again in the alignment device (31), and/or **in that**, downstream from the alignment device (31), the at least one partial stack is guided and/or transferred to at least one printing unit (03) of the sheet processing machine (01) and/or to at least one feeder (02) of the sheet processing machine (01) and/or to at least one unit processing the sheets.

14. Method according to claim 10 or 11 or 12 or 13, **characterized in that** at least one hold-down device (42) is arranged in each case at the at least two lateral stops (33) and/or at the at least one rear stop (34).

15. Method according to claim 10 or 11 or 12 or 13 or 14, **characterized in that** at least one of the at least four stops (32; 33; 34) includes at least one blower device, and at least one nozzle (37) of the blower device ejects fluid, at least while the partial stack is being aligned, and/or **in that** at least one of the at least four stops (32; 33; 34) comprises at least one outlet system (38) including at least one outlet opening, and fluid escapes from a region between the at least four stops (32; 33; 34) through the at least one outlet opening.

## Revendications

1. Système de manipulation de substrat avec une machine de traitement de feuilles (01) et au moins un équipement d'alignement (31), dans lequel le au moins un équipement d'alignement (31) comprend au moins quatre butées (32; 33; 34), dans lequel au moins une butée (32) est conçue en tant que butée avant (32) et au moins une butée (34) est conçue en tant que butée arrière (34) et au moins deux butées (33) sont respectivement conçues en tant que butée latérale (33), dans lequel les au moins deux butées latérales (33) sont agencées de façon opposée l'une à l'autre, dans lequel la au moins une butée avant (32) et la au moins une butée arrière (34) sont agencées de façon opposée l'une à l'autre, dans lequel l'équipement d'alignement (31) présente au moins un élément d'appui (41), dans lequel le au moins un élément d'appui (41) est conçu en tant qu'élément de dépose pour la dépose d'au moins une pile partielle de feuilles dans l'équipement d'alignement (31), dans lequel au moins un élément d'appui (41) est respectivement agencé contre les au moins deux butées latérales (33) et contre la au moins une butée arrière (34), **caractérisé en ce que**, sans autres éléments ou équipements entre les deux, au moins une palette (16) et/ou au moins un système de fourche et/ou au moins une plaque et/ou au moins un objet produisant au moins par moments un sol est agencé en-dessous du au moins un équipement d'alignement (31) et/ou en-dessous du au moins un élément d'appui (41).

2. Système de manipulation de substrat selon la revendication 1, **caractérisé en ce que** les au moins quatre butées (32; 33; 34) présentent respectivement au moins un entraînement (46) produisant une vibration ou un mouvement oscillant et/ou **en ce que** les au moins deux butées latérales (33) et/ou la au moins une butée arrière (34) présentent respectivement au moins un entraînement produisant un mouvement du au moins un élément d'appui (41) et/ou **en ce que** les au moins deux butées latérales (33) et/ou la au moins une butée arrière (34) présentent respectivement au moins un entraînement (44) produisant au moins un mouvement différent de la vibration ou du mouvement oscillant.

3. Système de manipulation de substrat selon la revendication 1 ou 2, **caractérisé en ce que** le au moins un élément d'appui (41) présente respectivement au moins deux positions, **en ce que** le au moins un élément d'appui (41) présente dans la première position une première distance et dans la seconde position une seconde distance depuis sa crête et jusqu'à la butée latérale (33) présentant le au moins un élément d'appui (41) respectif ou jusqu'à la butée arrière (34) présentant le au moins un élément d'appui (41) respectif, **en ce que** la première distance dans la première position est supérieure à la seconde distance dans la seconde position.

4. Système de manipulation de substrat selon la revendication 2 ou 3, **caractérisé en ce que** l'entraînement (46) produisant la au moins une vibration ou mouvement oscillant est conçu de façon à mettre en vibration ou en un mouvement oscillant le au moins un élément d'appui (41) et/ou **en ce que** chacune des au moins deux butées latérales (33) et la au moins une butée arrière (34) présentent respectivement au moins un entraînement (46) qui leur est propre et produisant la vibration ou le mouvement oscillant et/ou **en ce que** la fréquence de la vibration ou du mouvement oscillant des au moins quatre butées (32; 33; 34) est et/ou peut être réglée en fonction de la taille de format de feuilles et/ou du grammage de feuilles et/ou du matériau du substrat.

5. Système de manipulation de substrat selon la revendication 1 ou 2 ou 3 ou 4, **caractérisé en ce que** les au moins deux butées latérales (33) et/ou la au moins une butée arrière (34) présentent respectivement au moins une première position et au moins une seconde position et/ou **en ce qu'**au moins par moments au moins la au moins une butée avant (32) et au moins l'une des au moins deux butées latérales (33) sont fixées dans leur position et au moins par moments la au moins une butée arrière (34) et au moins une autre des au moins deux butées latérales (33) sont conçues de façon à réduire ou agrandir au moins par moments leur distance respective par rapport à la butée avant (32) fixée ou par rapport à la butée latérale (33) fixée.

6. Système de manipulation de substrat selon la revendication 2 ou 3 ou 4 ou 5, **caractérisé en ce que** le au moins un entraînement (44) produisant au moins un mouvement différent de la vibration ou du mouvement oscillant est conçu de façon à produire respectivement le mouvement des au moins deux butées latérales (33) et/ou de la au moins une butée arrière (34) de la première position vers la seconde position ou inversement et/ou **en ce que** le au moins un entraînement (44) produisant au moins un mouvement différent de la vibration ou du mouvement oscillant est conçu indépendamment du au moins un entraînement (46) produisant une vibration ou un mouvement oscillant et/ou **en ce que** les au moins deux butées latérales (33) et/ou la au moins une butée arrière (34) présentent respectivement au moins un entraînement (44) qui leur est propre et produisant au moins un mouvement différent de la vibration ou du mouvement oscillant.

7. Système de manipulation de substrat selon la revendication 1 ou 2 ou 3 ou 4 ou 5 ou 6, **caractérisé en ce que** l'équipement d'alignement (31) est agencé avant au moins un groupe d'impression (03) de la machine de traitement de feuilles (01) et/ou avant au moins un margeur (02) de la machine de traitement de feuilles (01) et/ou avant au moins une unité traitant les feuilles et/ou dans un système d'amenée (06) de la machine de traitement de feuilles (01) et/ou à l'intérieur de la zone d'action d'une cellule robotisée (11).

8. Système de manipulation de substrat selon la revendication 1 ou 2 ou 3 ou 4 ou 5 ou 6 ou 7, **caractérisé en ce qu'**au moins un organe de maintien en bas (42) est respectivement agencé contre les au moins deux butées latérales (33) et/ou contre la au moins une butée arrière (34).

9. Système de manipulation de substrat selon la revendication 1 ou 2 ou 3 ou 4 ou 5 ou 6 ou 7 ou 8, **caractérisé en ce qu'**au moins l'une des au moins quatre butées (32; 33; 34) comprend au moins un équipement de soufflerie et le au moins un équipement de soufflerie comprend au moins une buse (37) éjectant un fluide et/ou **en ce qu'**au moins l'une des au moins quatre butées (32; 33; 34) présente au moins un système de sortie (38) avec au moins une ouverture de sortie et est conçue de façon à laisser s'échapper un fluide depuis une zone entre les au moins quatre butées (32; 33; 34) à travers la au moins une ouverture de sortie.

10. Procédé d'alignement et/ou de desserrement d'au moins une pile partielle de feuilles dans un système de manipulation de substrat avec une machine de traitement de feuilles (01), dans lequel la au moins une pile partielle est positionnée dans un équipement d'alignement (31), dans lequel la au moins une pile partielle est alignée et/ou desserrée par l'équipement d'alignement (31), dans lequel l'équipement d'alignement (31) comprend au moins quatre butées (32; 33; 34), dans lequel au moins une butée (32) est conçue en tant que butée avant (32) et au moins une butée (34) est conçue en tant que butée arrière (34) et au moins deux butées (33) sont respectivement conçues en tant que butée latérale (33), dans lequel les au moins deux butées latérales (33) sont agencées de façon opposée l'une à l'autre, dans lequel la au moins une butée avant (32) et la au moins une butée arrière (34) sont agencées de façon opposée l'une à l'autre, dans lequel les au moins deux butées latérales (33) et la au moins une butée arrière (34) des au moins quatre butées (32; 33; 34) sont déplacées au moins par moments, dans lequel la au moins une pile partielle est déposée sur au moins un élément d'appui (41) lors du positionnement dans l'équipement d'alignement (31), dans lequel lors du positionnement dans l'équipement d'alignement (31) la au moins une pile partielle est déposée sur au moins un élément d'appui (41) respectivement agencé contre les au moins deux butées latérales (33) et au moins un élément d'appui (41) agencé contre la au moins une butée arrière (34), **caractérisé en ce qu'**au moins une palette (16) et/ou au moins un système de fourche et/ou au moins une plaque et/ou au moins un objet produisant au moins par moments un sol est positionné en-dessous de l'équipement d'alignement (31) et/ou en-dessous du au moins un élément d'appui (41).

11. Procédé selon la revendication 10, **caractérisé en ce que** les au moins deux butées latérales (33) et/ou la au moins une butée arrière (34) sont respectivement mises en vibration et/ou en un mouvement oscillant par au moins un entraînement (46) produisant une vibration et/ou un mouvement oscillant et/ou **en ce que** la au moins une butée avant (32) est respectivement mise en vibration et/ou en un mouvement oscillant par au moins un entraînement (46) produisant une vibration et/ou un mouvement oscillant.

12. Procédé selon la revendication 10 ou 11, **caractérisé en ce que** le au moins un élément d'appui (41) est déplacé d'une première position déployée vers une seconde position escamotée et/ou inversement et/ou **en ce que** pendant l'alignement de la au moins une pile partielle au moins l'une des au moins deux butées latérales (33) et la au moins une butée arrière (34) sont déplacées dans la direction de la au moins une pile partielle et/ou **en ce que** les au moins deux butées latérales (33) et/ou la au moins une butée arrière (34) sont respectivement déplacées d'au moins une première position vers au moins une seconde position ou inversement.

13. Procédé selon la revendication 10 ou 11 ou 12, **caractérisé en ce que** la au moins une pile partielle est desserrée après un premier alignement puis à nouveau alignée dans l'équipement d'alignement (31) et/ou **en ce que** la au moins une pile partielle est conduite ou transmise après l'équipement d'alignement (31) à au moins un groupe d'impression (03) de la machine de traitement de feuilles (01) et/ou à au moins un margeur (02) de la machine de traitement de feuilles (01) et/ou à au moins une unité traitant les feuilles.

14. Procédé selon la revendication 10 ou 11 ou 12 ou 13, **caractérisé en ce qu'**au moins un organe de maintien en bas (42) est respectivement agencé contre les au moins deux butées latérales (33) et/ou contre la au moins une butée arrière (34).

15. Procédé selon la revendication 10 ou 11 ou 12 ou 13 ou 14, **caractérisé en ce qu'**au moins l'une des au moins quatre butées (32; 33; 34) comprend au moins un équipement de soufflerie et au moins une buse (37) de l'équipement de soufflerie éjecte un fluide au moins pendant l'alignement de la pile partielle et/ou **en ce qu'**au moins l'une des au moins quatre butées (32; 33; 34) présente au moins un système de sortie (38) avec au moins une ouverture de sortie et un fluide s'échappe depuis une zone entre les au moins quatre butées (32; 33; 34) à travers la au moins une ouverture de sortie.
